# EUROPEAN PATENT APPLICATION

(11) **EP 4 434 428 A1**
(43) Date of publication of application: **25.09.2024**
(21) Application number: 23799567.5
(22) Date of filing: 20.03.2023
(51) Int. Cl.: A47L 11/40, B25J 9/16, B25J 13/08, B25J 19/02

(54) **DRIVING ROBOT, CONTROL METHOD OF DRIVING ROBOT, AND RECORDING MEDIUM HAVING RECORDED THEREON COMPUTER PROGRAM**

(30) Priority: 04.05.2022 KR 20220055721
(71) Applicant: Samsung Electronics Co., Ltd., Suwon-si, Gyeonggi-do 16677 (KR)
(72) Inventor: SO, Jeayun, Suwon-si, Gyeonggi-do 16677 (KR); KIM, Jinhee, Suwon-si, Gyeonggi-do 16677 (KR); RYU, Minwoo, Suwon-si, Gyeonggi-do 16677 (KR); LEE, Hakbong, Suwon-si, Gyeonggi-do 16677 (KR); JEONG, Yeonkyu, Suwon-si, Gyeonggi-do 16677 (KR); YOON, Sangsik, Suwon-si, Gyeonggi-do 16677 (KR)
(74) Representative: Walaski, Jan Filip
(86) International application number: PCT/KR2023/003662
(87) International publication number: WO 2023/214684

(57) **Abstract**

Provided are a driving robot apparatus, a controlling method of the driving robot apparatus, and a computer-readable recording medium having recorded thereon a computer program. The driving robot apparatus includes at least one processor configured to control a moving assembly to change a traveling direction of the driving robot apparatus so that the driving robot apparatus is aligned with an obstacle, control a cleaning assembly to move a holder so that a cleaning pad fixed to the holder protrudes outward from the driving robot apparatus, and control the moving assembly to move the driving robot apparatus so that the cleaning pad fixed to the holder and protruding outward from the driving robot apparatus is moved along an outer edge of the obstacle.

## Description

### TECHNICAL FIELD

The disclosure relates to a driving robot apparatus, a controlling method of the driving robot apparatus, and a computer-readable recording medium having recorded thereon a computer program.

### BACKGROUND ART

The Internet of things (loT) is a foundation technology and service of the hyper-connected society and the next-generation Internet. IoT may also be defined as the Internet of objects and refers to an environment in which information generated by uniquely identifiable objects is shared via the Internet.

Internet-connected devices (loT devices) use built-in sensors to collect data and to respond thereto according to circumstances. IoT devices are useful for improving how people work and live. IoT devices are applied in various fields, from smart home devices that automatically adjust heating and lighting to smart factories that monitor industrial equipment to find problems and automatically solve the found problems.

On the other hand, loT devices may also be used in a driving robot apparatus for cleaning. A driving robot apparatus for cleaning is a home appliance that performs vacuum cleaning or wet mop cleaning in a home. For example, in a case where a driving robot apparatus for cleaning connects to the Internet, even when a user does not live indoors, the user may remotely control the driving robot apparatus for cleaning from the outside by using a mobile terminal, and may reserve a cleaning time by using the mobile terminal. A driving robot apparatus for cleaning performs cleaning in a home by recognizing main home appliances and furniture through object recognition.

### DESCRIPTION OF EMBODIMENTS

### TECHNICAL SOLUTION TO PROBLEM

According to an embodiment of the disclosure, a driving robot apparatus may include a moving assembly, a cleaning assembly including a holder to which a cleaning pad is fixable, the holder being movable, a sensor configured to detect an obstacle located on a traveling path of the driving robot apparatus, and at least one processor configured to, based on the detection of the obstacle by the sensor, control the moving assembly to change a traveling direction of the driving robot apparatus so that the driving robot apparatus is aligned with the obstacle, control the cleaning assembly to move the holder so that a cleaning pad fixed to the holder protrudes outward from the driving robot apparatus, and control the moving assembly to move the driving robot apparatus so that the cleaning pad fixed to the holder and protruding outward from the driving robot apparatus is moved along an outer edge of the obstacle.

Also, the at least one processor may be further configured to control the moving assembly so that the driving robot apparatus is aligned with the obstacle based on an angular velocity of the driving robot apparatus with respect to the obstacle.

Also, the cleaning pad fixed to the holder may have a diameter greater than a diameter of the holder, and the at least one processor may be further configured to adjust a position of the holder within a main body of the driving robot apparatus so that the cleaning pad fixed to the holder protrudes outward from the driving robot apparatus.

Also, the driving robot apparatus may further include a magnet sensor to detect a first position of the holder, wherein the at least one processor may be further configured to move the holder from a second position to the first position based on the detection of the first position of the holder by the magnet sensor.

Also, the at least one processor may be further configured to identify a position of the detected obstacle, and control the moving assembly so that the cleaning pad fixed to the holder and protruding outward from the driving robot apparatus moves along at least a portion of the outer edge of the obstacle, based on the position of the detected obstacle and a position of the cleaning pad fixed to the holder and protruding outward from the driving robot apparatus.

Also, the at least one processor may be further configured to identify whether a movement of the driving robot apparatus is a preset movement, control the cleaning assembly to move the holder so that the cleaning pad fixed to the holder does not protrude outward from the driving robot apparatus, based on whether the movement of the driving robot apparatus is identified as a preset movement, and control the moving assembly to travel so that the driving robot apparatus from which the cleaning pad fixed to the holder does not protrude outward follows the obstacle.

Also, the at least one processor may be further configured to control the sensor to identify a HALO signal generated from a charger of the driving robot apparatus, and control the cleaning assembly to move the holder so that the cleaning pad fixed to the holder does not protrude outward from the driving robot apparatus, based on the HALO signal.

Also, the at least one processor may be further configured to detect a remaining battery level of the driving robot apparatus, and control the cleaning assembly to move the holder so that the cleaning pad fixed to the holder does not protrude outward from the driving robot apparatus, based on the detected remaining battery level.

Also, the at least one processor may be further configured to detect a threshold via the sensor, determine whether to cross over the threshold; control the cleaning assembly to move the holder so that the cleaning pad fixed to the holder does not protrude outward from the driving robot apparatus, based on the determining to cross over the threshold; and control the moving assembly to cross over the threshold.

Also, the at least one processor may be further configured to identify an angular velocity of the driving robot apparatus with respect to the obstacle as a first angular velocity, compare the first angular velocity with a second angular velocity, the second angular velocity being a reference angular velocity allowing the driving robot apparatus to move along the obstacle, adjust the traveling path of the driving robot apparatus, based on a result of the comparing the first angular velocity with the second angular velocity, and control the moving assembly so that the driving robot apparatus moves along the adjusted traveling path.

According to an embodiment of the disclosure, a method of controlling a driving robot apparatus, may include detecting an obstacle located on a traveling path of the driving robot apparatus; controlling moving assembly to change a traveling direction of the driving robot apparatus so that the driving robot apparatus is aligned with the obstacle; controlling cleaning assembly having a holder to move the holder so that a cleaning pad fixed to the holder protrudes outward from the driving robot apparatus; and controlling the moving assembly to move the driving robot apparatus so that the cleaning pad fixed to the holder and protruding outward from the driving robot apparatus is moved along an outer edge of the obstacle.

Also, the changing of the traveling direction of the driving robot apparatus may include controlling the moving assembly so that the driving robot apparatus is aligned with the obstacle, based on an angular velocity of the driving robot apparatus with respect to the obstacle.

Also, the cleaning pad fixed to the holder may have a diameter greater than a diameter of the holder, and the moving of the holder so that the cleaning pad fixed to the holder protrudes outward from the driving apparatus may include adjusting a position of the holder within a main body of the driving robot apparatus so that the cleaning pad fixed to the holder protrudes outward from the driving robot apparatus.

Also, the method may further include moving the holder from a second position to a first position, based on detection by a magnet sensor of the holder being in the first position.

Also, the detecting of the obstacle may include identifying a position of the detected obstacle,
and the controlling of the moving assembly may include controlling the moving assembly so that the cleaning pad fixed to the holder and protruding outward from the driving robot apparatus moves along at least a portion of the outer edge of the obstacle, based on the position of the detected obstacle and a position of the cleaning pad fixed to the holder and protruding outward from the driving robot apparatus.

Also, the method may further include identifying whether a movement of the driving robot apparatus is a preset movement; controlling the cleaning assembly to move the holder so that the cleaning pad fixed to the holder does not protrude outward from the driving robot apparatus, based on whether the movement of the driving robot apparatus is identified as a preset movement; and controlling the moving assembly to travel so that the driving robot apparatus from which the cleaning pad fixed to the holder does not protrude follows the obstacle.

Also, the method may further include controlling a sensor to identify a HALO signal generated from a charger of the driving robot apparatus; and controlling the cleaning assembly to move the holder so that the cleaning pad fixed to the holder does not protrude outward from the driving robot apparatus, based on the HALO signal.

Also, the method may further include detecting a remaining battery level of the driving robot apparatus; and controlling the cleaning assembly to move the holder so that the cleaning pad fixed to the holder does not protrude outward from the driving robot apparatus, based on the detected remaining battery level.

Also, the method may further include detecting a threshold via a sensor; determining whether to cross over the threshold; controlling the cleaning assembly to move the holder so that the cleaning pad fixed to the holder does not protrude outward from the driving robot apparatus, based on the determining to cross over the threshold; and controlling the moving assembly to cross over the threshold.

Also, the detecting of the obstacle may include identifying an angular velocity of the driving robot apparatus with respect to the obstacle as a first angular velocity; and comparing the first angular velocity with a second angular velocity, the second angular velocity being a reference angular velocity allowing the driving robot apparatus to move along the obstacle, and the changing of the traveling direction of the driving robot apparatus may include adjusting the traveling path of the driving robot apparatus, based on a result of the comparing the first angular velocity with the second angular velocity, and the controlling of the moving assembly may include controlling the moving assembly so that the driving robot apparatus moves along the adjusted traveling path.

According to an embodiment of the disclosure, provided is a computer-readable recording medium having recorded thereon a computer program for causing a computer to perform at least one of the methods according to embodiments of the disclosure.

According to an embodiment of the disclosure, an application stored in a computer-readable recording medium may execute a function of at least one of the methods according to embodiments of the disclosure.

### BRIEF DESCRIPTION OF DRAWINGS

FIG. 1 is a diagram for describing an operation of a driving robot apparatus, according to an embodiment of the disclosure.
FIG. 2 is a block diagram illustrating a structure of a driving robot apparatus, according to an embodiment of the disclosure.
FIG. 3 is a block diagram illustrating a structure of a driving robot apparatus, according to an embodiment of the disclosure.
FIG. 4 is a diagram illustrating a structure of a rotary pad assembly of a driving robot apparatus, according to an embodiment of the disclosure.
FIG. 5 is a flowchart illustrating a controlling method of a driving robot apparatus, according to an embodiment of the disclosure.
FIG. 6 is a diagram illustrating a structure of a rotary pad assembly of a driving robot apparatus that is popped out, according to an embodiment of the disclosure.
FIG. 7 is a diagram illustrating an operation by which a rotary pad assembly of a driving robot apparatus is popped out, according to an embodiment of the disclosure.
FIG. 8 is a diagram illustrating an operation by which a rotary pad assembly of a driving robot apparatus is popped in, according to an embodiment of the disclosure.
FIG. 9 is a diagram illustrating an operation by which a rotary pad assembly of a driving robot apparatus is popped in, according to an embodiment of the disclosure.
FIGS. 10A to 10C are diagrams illustrating an operation by which a rotary pad assembly of a driving robot apparatus rotates, according to an embodiment of the disclosure.
FIG. 11 is a diagram illustrating an operation by which a driving robot apparatus performs cleaning while traveling, according to an embodiment of the disclosure.
FIG. 12 is a diagram illustrating an operation by which a driving robot apparatus performs cleaning while traveling, according to an embodiment of the disclosure.
FIG. 13 is a diagram illustrating an operation by which a driving robot apparatus performs cleaning while traveling, according to an embodiment of the disclosure.
FIG. 14 is a flowchart illustrating a method by which a driving robot apparatus enters and escapes from a narrow passage, according to an embodiment of the disclosure.
FIG. 15 is a diagram illustrating an operation by which a driving robot apparatus enters and escapes from a narrow passage, according to an embodiment of the disclosure.
FIG. 16 is a diagram illustrating an operation by which a driving robot apparatus enters and escapes from a narrow passage, according to an embodiment of the disclosure.
FIG. 17 is a diagram illustrating an operation by which a driving robot apparatus enters and escapes from a narrow passage, according to an embodiment of the disclosure.
FIG. 18 is a flowchart illustrating a controlling method when a driving robot apparatus detects a charger, according to an embodiment of the disclosure.
FIG. 19 is a diagram illustrating an operation when a driving robot apparatus detects a charger, according to an embodiment of the disclosure.
FIG. 20 is a flowchart illustrating a controlling method of a driving robot apparatus according to a remaining battery level, according to an embodiment of the disclosure.
FIG. 21 is a diagram illustrating an operation of a driving robot apparatus according a remaining battery level, according to an embodiment of the disclosure.
FIG. 22 is a flowchart illustrating a method by which a driving robot apparatus crosses over a threshold, according to an embodiment of the disclosure.
FIGS. 23A to 23C are diagrams illustrating an operation by which a driving robot apparatus crosses over a threshold, according to an embodiment of the disclosure.
FIG. 24 is a flowchart illustrating a method by which a driving robot apparatus detects an obstacle and adjusts a traveling path, according to an embodiment of the disclosure.
FIG. 25 is a diagram illustrating an operation by which a driving robot apparatus detects an obstacle and adjusts a traveling path, according to an embodiment of the disclosure.
FIG. 26 is a diagram illustrating an operation by which a driving robot apparatus detects an obstacle and adjusts a traveling path, according to an embodiment of the disclosure.

### MODE OF DISCLOSURE

In the disclosure, the expression "at least one of a, b or c" indicates "a," "b," "c," "a and b," "a and c," "b and c," "all of a, b, and c," or variations thereof.

The disclosure clarifies the scope of the claims and explains the principles of embodiments of the disclosure so that those of ordinary skill in the art may carry out the embodiments of the disclosure set forth in the claims. Embodiments of the disclosure may be implemented in various forms. The embodiments of the disclosure described herein may be implemented alone, or may be implemented in combination of at least two or more embodiments of the disclosure.

Throughout the disclosure, the same reference numerals refer to the same elements. The disclosure does not explain all elements of the embodiments of the disclosure, and general descriptions in the technical field to which the embodiments of the disclosure belong or redundant descriptions between the embodiments of the disclosure will be omitted. The terms such as "module" or "unit" as used herein may be implemented as software, hardware, or firmware alone or in combination of two or more thereof. According to embodiments of the disclosure, a plurality of "modules" or "units" may be implemented as one element, or one "module" or "unit" may include a plurality of elements.

Some embodiments of the disclosure may be represented by functional block configurations and various processes. All or part of these functional blocks may be implemented in various numbers of hardware and/or software configurations that perform specific functions. For example, the functional blocks of the disclosure may be implemented by one or more microprocessors, or may be implemented by circuit configurations for certain functions. In addition, for example, the functional blocks of the disclosure may be implemented in various programming or scripting languages. The functional blocks may be implemented by algorithms that are executed on one or more processors. In addition, the disclosure may employ a related art for electronic environment setting, signal processing, and/or data processing. The terms such as "mechanism," "element," "means," and "configuration" may be used in a broad sense and are not limited to mechanical and physical configurations.

In describing the embodiment of the disclosure, when the detailed description of the relevant known technology is determined to unnecessarily obscure the gist of the disclosure, the detailed description thereof may be omitted herein. Also, numbers (e.g., first, second, etc.) used in the description of the specification are merely identification symbols for distinguishing one element from another.

Also, when one element is referred to as "connected" or "coupled" to another element, the one element may be directly connected or coupled to the other element, but it will be understood that the elements may be connected or coupled to each other via another element therebetween unless the context clearly indicates otherwise.

Embodiments of the disclosure relate to a driving robot apparatus, a controlling method of the driving robot apparatus, and a computer-readable recording medium having recorded thereon a computer program.

On the other hand, the technical objectives to be achieved by the embodiments of the disclosure are not limited to the technical objectives described above.

Hereinafter, the operating principle of embodiments of the disclosure and various embodiments of the disclosure will be described with reference to the accompanying drawings.

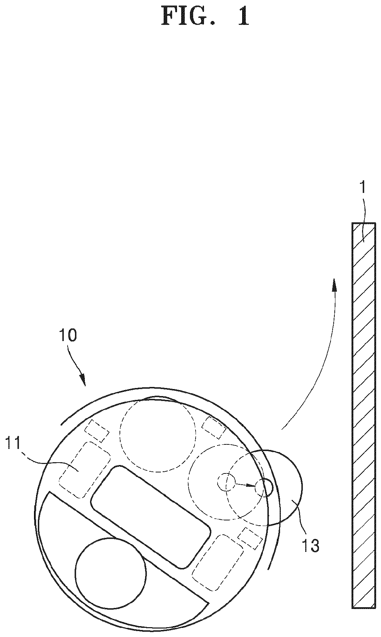

FIG. 1 is a diagram for describing an operation of a driving robot apparatus, according to an embodiment of the disclosure.

Embodiments of the disclosure relate to a driving robot apparatus 10 that travels in a certain area. The driving robot apparatus 10 is a robot apparatus that is movable by itself by using wheels or the like, and is capable of performing cleaning while moving in a certain area. The certain area may be a space to be cleaned, such as a house or an office.

Referring to FIG. 1, the driving robot apparatus 10 may perform vacuum cleaning or wet mop cleaning while traveling within a traveling area. The traveling area may be defined according to a certain criterion while the driving robot apparatus 10 starts operating, or may be set in advance by a designer or a user. The traveling area of the driving robot apparatus 10 may be variously defined as a house, a store, an office, or a specific outdoor space. The traveling area of the driving robot apparatus 10 may be defined in advance by a wall, a ceiling, a sign, and the like.

The driving robot apparatus 10 travels within a certain traveling area by using a moving assembly 11. For example, the driving robot apparatus 10 may move in a certain direction by using one or more wheels included in the moving assembly 11.

The driving robot apparatus 10 may clean a certain area by using a cleaning assembly while traveling. The driving robot apparatus 10 may include two or more cleaning assemblies. For example, the driving robot apparatus 10 may include a cleaning assembly that performs water cleaning on a certain area. The driving robot apparatus 10 may perform cleaning by swiping a certain area with a cleaning pad 13 to which water is supplied. The driving robot apparatus 10 may perform cleaning by using a rotary motor to rotate a holder that fixes the cleaning pad 13. As another example, the driving robot apparatus 10 may include a cleaning assembly that sucks foreign material by vacuum in a certain area. As another example, the driving robot apparatus 10 may include a cleaning assembly that applies vertical and/or horizontal vibration to shake off dust from an object (e.g., a carpet, etc.) located under the driving robot apparatus 10. The cleaning assemblies may be located in other portions of the driving robot apparatus 10. For example, the cleaning assembly that performs water cleaning may be located at the front end of the driving robot apparatus 10, and the cleaning assembly that applies vibration may be located at the rear end of the driving robot apparatus 10.

The driving robot apparatus 10 may travel while identifying an obstacle 1. The driving robot apparatus 10 may identify the obstacle 1 by using a camera, a sensor, or the like. For example, the driving robot apparatus 10 may detect the obstacle 1 by using an input image captured by a camera. The driving robot apparatus 10 may detect the obstacle 1 by analyzing an input image by using an artificial intelligence model that is built in the driving robot apparatus 10 or is built in a cloud server. As another example, the driving robot apparatus 10 may detect the obstacle 1 by using a distance measuring sensor, such as a lidar.

The driving robot apparatus 10 may determine whether to follow the identified obstacle 1.

The driving robot apparatus 10 may follow the identified obstacle 1. For example, the driving robot apparatus 10 may move along a wall. As another example, the driving robot apparatus 10 may move along legs of furniture. The driving robot apparatus 10 may adjust the moving direction of the driving robot apparatus 10, so that the driving robot apparatus 10 is aligned with the obstacle 1 in order to follow the obstacle 1. For example, the driving robot apparatus 10 may adjust the moving direction of the driving robot apparatus 10, so that the driving robot apparatus 10 is aligned with the obstacle 1, based on an angular velocity of the driving robot apparatus 10 with respect to the obstacle 1.

The driving robot apparatus 10 may adjust a traveling path so as to avoid the identified obstacle 1. For example, the driving robot apparatus 10 may adjust the traveling path of the driving robot apparatus 10, based on a result of comparing the angular velocity of the driving robot apparatus 10 with respect to the obstacle 1 and a reference angular velocity allowing the driving robot apparatus 10 to follow the obstacle 1.

When the driving robot apparatus 10 follows the obstacle 1, one or more cleaning pads 13 may be popped out. For example, the driving robot apparatus 10 may pop out the cleaning pad 13 located toward the obstacle 1, so that the cleaning pad 13 protrudes outward from the driving robot apparatus 10. The driving robot apparatus 10 may pop out the cleaning pad 13 by using a slider that moves the holder to which the cleaning pad 13 is fixed. The driving robot apparatus 10 may pop out the cleaning pad 13 by using an arm having one side connected to the driving robot apparatus 10 and the other side connected to the holder that fixes the cleaning pad 13. The driving robot apparatus 10 travels so that the popped-out cleaning pad 13 moves along the outer edge of the obstacle 1, so as to clean an area between the obstacle 1 and the bottom of the driving robot apparatus 10.

The driving robot apparatus 10 may pop in the popped-out cleaning pad 13. For example, the driving robot apparatus 10 may stop following the obstacle 1 and pop in the cleaning pad 13. As another example, the driving robot apparatus 10 may pop in the cleaning pad 13 in order to escape from a narrow passage. As another example, the driving robot apparatus 10 may pop in the cleaning pad 13 by detecting a collision avoidance signal (e.g., HALO signal) generated from a charger or a docking station. As another example, the driving robot apparatus 10 may pop in the cleaning pad 13 based on a remaining battery level of the driving robot apparatus 10. As another example, the driving robot apparatus 10 may pop in the cleaning pad 13 in order to cross over a threshold. The driving robot apparatus 10 may pop in the cleaning pad 13 to a proper position by moving the holder based on a magnet sensor for the position of the holder that fixes the cleaning pad 13.

It is difficult for conventional driving robot apparatuses to easily clean a space smaller than a size of a cleaning pad. Embodiments of the disclosure solve the conventional problems so that the driving robot apparatus 10 may easily and cleanly clean the floor adjacent to the obstacle.

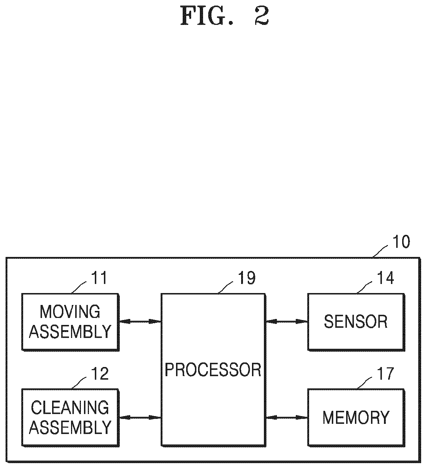

FIG. 2 is a block diagram illustrating a structure of a driving robot apparatus, according to an embodiment of the disclosure.

Referring to FIG. 2, a driving robot apparatus 10 according to an embodiment of the disclosure may include a moving assembly 11, a cleaning assembly 12, a sensor 14, a memory 17, and a processor 19. However, not all elements illustrated in FIG. 2 are essential elements of the driving robot apparatus 10. It will be understood by those of ordinary skill in the art related to the present embodiment of the disclosure that the driving robot apparatus 10 may be implemented with more elements than the elements illustrated in FIG. 2, or may be implemented with fewer elements than the elements illustrated in FIG. 2.

The moving assembly 11 may be located under the driving robot apparatus 10 and may move the driving robot apparatus 10 forward and backward and rotate the driving robot apparatus 10.

The cleaning assembly 12 performs cleaning while the driving robot apparatus 10 travels. The cleaning assembly 12 may be located under the driving robot apparatus 10.

According to an embodiment of the disclosure, the cleaning assembly 12 may be classified according to the purpose and structure. For example, the cleaning assembly 12 may include a cleaning assembly that performs wet mop cleaning, a cleaning assembly that sucks foreign materials by vacuum, and a cleaning assembly that applies vertical and/or horizontal vibration to shake off dust from an object. The driving robot apparatus 10 may include one or more cleaning assemblies 12 according to the purpose.

The sensor 14 obtains data to be used when the driving robot apparatus 10 travels and/or performs cleaning. For example, the sensor 14 may obtain an image to be used to detect an obstacle located near the driving robot apparatus 10. As another example, the sensor 14 may detect a distance to the obstacle located near the driving robot apparatus 10. As another example, the sensor 14 may obtain information about the position of the driving robot apparatus 10 within a certain area. As another example, the sensor 14 may obtain information about approach of a holder fixing a cleaning pad to a certain position.

The memory 17 may store programs and instructions for data processing by the processor 19 and control by the driving robot apparatus 10.

According to an embodiment of the disclosure, the memory 17 may include at least one type of storage medium selected from a memory that temporarily stores data, such as random access memory (RAM) or static random access memory (SRAM), and a data storage that non-temporarily stores data, such as flash memory type or read-only memory (ROM).

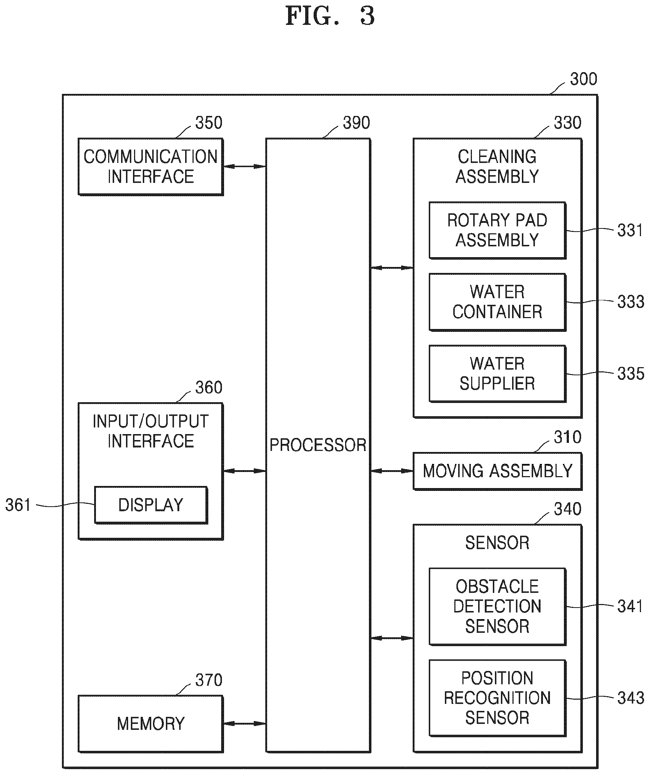

The processor 19 controls overall operations of the driving robot apparatus 10. The processor 19 may be implemented as one or more processors. The processor 19 may execute instructions stored in the memory 17 to control overall operations of the moving assembly 11, the cleaning assembly 12, the sensor 14, the memory 17, and the like. The processor 19 may execute programs and/or instructions to control the driving robot apparatus 10 to perform embodiments of the disclosure to be described with reference to FIGS. 3 to 26. For example, the processor 19 controls the moving assembly 11 to control the traveling of the driving robot apparatus 10. As another example, the processor 19 controls the cleaning assembly 12 to perform cleaning while the driving robot apparatus 10 travels. As another example, the processor 19 may process data obtained by the sensor 14.

FIG. 3 is a block diagram illustrating a structure of a driving robot apparatus, according to an embodiment of the disclosure.

Referring to FIG. 3, a driving robot apparatus 300 may include a moving assembly 310, a cleaning assembly 330, a sensor 340, a communication interface 350, an input/output interface 360, a memory 370, and a processor 390. However, not all elements illustrated in FIG. 3 are essential elements of the driving robot apparatus 300. It will be understood by those of ordinary skill in the art related to the present embodiment of the disclosure that the driving robot apparatus 300 may be implemented with more elements than the elements illustrated in FIG. 3, or may be implemented with fewer elements than the elements illustrated in FIG. 3.

The moving assembly 310 moves the driving robot apparatus 300.

According to an embodiment of the disclosure, the moving assembly 310 may include a pair of wheels respectively disposed on left and right edges of the center area of the main body of the driving robot apparatus 300. Also, the moving assembly 310 may include a wheel motor that applies a moving force to each wheel, and a caster wheel that is installed in front of the main body and rotates according to the state of the floor on which the driving robot apparatus 10 moves, so that an angle thereof is changed. The pair of wheels may be symmetrically disposed on the main body of the driving robot apparatus 300. The moving assembly 310 may use the wheels to move the driving robot apparatus 300 forward and backward and rotate the driving robot apparatus 300.

The cleaning assembly 330 may perform a cleaning operation while the driving robot apparatus 300 travels. For example, the cleaning assembly 330 may perform vibration cleaning, vacuum cleaning, and/or water cleaning.

According to an embodiment of the disclosure, the cleaning assembly 330 may include a rotary pad assembly 331 that cleans a certain area with a wet mop, a water container 333 that contains water to be supplied to the rotary pad assembly 331, and a water supplier 335 that supplies water to the rotary pad assembly 331. The rotary pad assembly 331 may include a cleaning pad, a holder that fixes the cleaning pad, and a rotary motor that rotates the holder.

According to an embodiment of the disclosure, the cleaning assembly 330 may include a mechanism that moves the cleaning pad so that the cleaning pad protrudes outward from the driving robot apparatus 300 and the cleaning pad protruding outside is inserted into the driving robot apparatus 300. For example, the cleaning assembly 330 may include a slider that moves the holder to which the cleaning pad is fixed. As another example, the cleaning assembly 330 may include an arm having one side connected to the driving robot apparatus 300 and the other side connected to the holder that fixes the cleaning pad. The cleaning assembly 330 may include a sensor and a guide that helps the cleaning pad protruding outward from the driving robot apparatus 300 to be inserted into a proper position.

The sensor 340 obtains sensing data to be used when the driving robot apparatus 300 travels and/or performs cleaning. The sensing data refers to data obtained through various sensors disposed in the driving robot apparatus 300. For example, the sensor 340 may obtain data to be used to detect an obstacle while the driving robot apparatus 300 travels. As another example, the sensor 340 may detect a HALO signal generated from a charger of the driving robot apparatus 300. As another example, the sensor 340 may detect a remaining battery level of the driving robot apparatus 300. As another example, the sensor 340 may obtain data to be used when the driving robot apparatus 300 searches an indoor space and generates an indoor space map. The indoor space refers to an area in which the driving robot apparatus 300 may move substantially freely.

According to an embodiment of the disclosure, the sensor 340 may include an obstacle detection sensor 341 and a position recognition sensor 343.

The obstacle detection sensor 341 may obtain data to be used to detect an obstacle located on a traveling path of the driving robot apparatus 300. The obstacle detection sensor 341 may include at least one of an image sensor that obtains an image, a three-dimensional (3D) sensor, a lidar sensor, or an ultrasonic sensor. For example, the image sensor may obtain surrounding and/or ceiling images to be used to detect an obstacle located near the driving robot apparatus 300. The lidar sensor and/or the ultrasonic sensor may obtain data regarding a distance to the obstacle located near the driving robot apparatus 300. The 3D sensor may obtain 3D data regarding an area within a certain distance from the driving robot apparatus 300.

The position recognition sensor 343 may obtain data for recognizing the position of the driving robot apparatus 300 in the indoor space. The position recognition sensor 343 may recognize the position of the driving robot apparatus 300 based on at least one of image data, 3D data obtained by the 3D sensor, information about the distance to the obstacle, which is obtained by the lidar sensor, or strength of a communication signal received from an access point (AP) and/or a home appliance. The position recognition sensor 343 may recognize the position of the driving robot apparatus 300 in the indoor space map. The indoor space map may include data regarding at least one of a navigation map, a simultaneous localization and mapping (SLAM) map, or an obstacle recognition map.

The communication interface 350 may communicate with an external device. For example, the communication interface 350 may transmit and receive data to and from a mobile terminal (e.g., a smartphone, a laptop computer, a tablet personal computer (PC), a digital camera, an e-book terminal, or a digital broadcasting terminal), a server device, or a home appliance (e.g., a refrigerator or a washing machine). The communication interface 350 may include a Bluetooth communication interface, a Bluetooth Low Energy (BLE) communication interface, a Near Field Communication interface, a wireless local area network (WLAN) (Wi-Fi) communication interface, a ZigBee communication interface, an Infrared Data Association (IrDA) communication interface, a Wi-Fi Direct (WFD) communication interface, ultra-wideband (UWB) communication interface, an Ant+ communication interface, a mobile communication interface, etc., but the disclosure is not limited thereto.

The input/output interface 360 is a hardware module and/or device that receives a user input and outputs information. For example, the input/output interface 360 may include an output device, such as a display 361 or a speaker, an input device, such as a microphone, a keyboard, a touch pad, or a mouse, and a combination (e.g., a touchscreen) of the output device and the input device. Also, the input/output interface 360 may receive a user input of controlling the driving robot apparatus 300. The input/output interface 360 may output information about the state of the driving robot apparatus 300 and information about the operation mode of the driving robot apparatus 300.

The memory 370 may store various types of data, for example, an operating system (OS) for data processing by the processor 390 and control by the driving robot apparatus 300, programs such as applications, and files. The memory 370 may store at least one instruction and at least one program for processing and control by the processor 390.

The memory 370 may include at least one type of storage medium selected from flash memory-type memory, hard disk-type memory, multimedia card micro-type memory, card-type memory (e.g., secure digital (SD) or extreme digital (XD) memory), random access memory (RAM), static random access memory (SRAM), read-only memory (ROM), electrically erasable programmable read-only memory (EEPROM), programmable read-only memory (PROM), magnetic memory, magnetic disc, and optical disc, but the disclosure is not limited thereto.

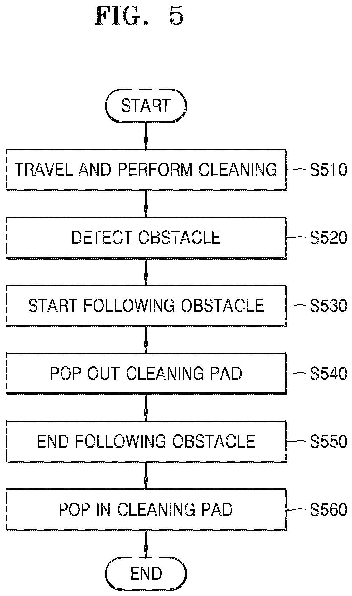

The processor 390 controls overall operations of the driving robot apparatus 300. The processor 390 may be implemented as one or more processors. The processor 390 may execute instructions stored in the memory 370 to control overall operations of the moving assembly 310, the cleaning assembly 330, the sensor 340, the communication interface 350, the input/output interface 360, the memory 370, and the like. The processor 390 may execute programs and/or instructions to control operations of the driving robot apparatus 300 to be described with reference to FIGS. 5 to 26.

For example, the processor 390 may control the moving assembly 310 to control the traveling of the driving robot apparatus 300. The processor 390 may generate a driving signal for controlling the moving assembly 310, and may output the driving signal to the moving assembly 310. The moving assembly 310 may drive each component of the moving assembly 310 based on the driving signal output from the processor 390. The processor 390 may set the traveling path of the driving robot apparatus 300 and drive the moving assembly 310 to move the driving robot apparatus 300 along the traveling path. The processor 390 may generate the driving signal of the moving assembly 310 that changes the traveling direction of the driving robot apparatus 300 so that the driving robot apparatus 300 is aligned with the obstacle and travels along the outer edge of the obstacle. The processor 390 may generate the driving signal of the moving assembly 310 based on the angular velocity of the driving robot apparatus 300 with respect to the obstacle. The processor 390 may generate the driving signal of the moving assembly 310 based on a result of comparing the angular velocity of the driving robot apparatus 300 with respect to the obstacle and a reference angular velocity allowing the driving robot apparatus 300 to move along the outer edge of the obstacle. The processor 390 may generate the driving signal of the moving assembly 310 so that the popped-out cleaning assembly moves along the outer edge of the obstacle, based on the position of the obstacle and the position of the popped-out cleaning assembly 330.

As another example, the processor 390 may control the cleaning assembly 330 so that the driving robot apparatus 300 performs cleaning while traveling. The processor 390 may generate a driving signal for controlling the cleaning assembly 330, and may output the driving signal to the cleaning assembly 330. The cleaning assembly 330 may drive each component of the cleaning assembly 330 based on the driving signal output from the processor 390. The cleaning assembly 330 may control the rotation and movement of the holder fixing the cleaning pad and the supply of water to the cleaning pad according to the driving signal output from the processor 390. The processor 390 may generate a driving signal for moving the holder fixing the cleaning pad, so that the cleaning pad is popped out to the outside of the driving robot apparatus 300. The processor 390 may generate a driving signal for moving the holder so that the popped-out cleaning pad is popped in. The processor 390 may control a holder moving speed based on information about the position of the holder, which is obtained by the sensor 340. The processor 390 may generate a driving signal for moving the holder so that the popped-out cleaning pad is popped in, based on the movement of the driving robot apparatus 300. The processor 390 may generate a driving signal for moving the holder so that the popped-out cleaning pad is popped in, based on a remaining battery level of the driving robot apparatus 300. The processor 390 may generate a driving signal for moving the holder so that the popped-out cleaning pad is popped in when the driving robot apparatus 300 crosses over a threshold.

As another example, the processor 390 may process data obtained by the sensor 340. The processor 390 may process an image obtained by the sensor 340 so as to identify an obstacle from the image. The processor 390 may identify an obstacle from distance data obtained by the sensor 340. The processor 390 may generate and adjust a traveling path by using data regarding the position of the driving robot apparatus 300, which is obtained by the sensor 340. The processor 390 may calculate an angular velocity of the driving robot apparatus 300 with respect to an obstacle, based on data obtained by the sensor 340. The processor 390 may generate a driving signal for adjusting the position of the holder by using information about the position of the holder, which is obtained by the sensor 340.

As another example, the processor 390 may control the moving assembly 310 and the cleaning assembly 330 based on a control signal received through the communication interface 350. The processor 390 may control the moving assembly 310 so that the driving robot apparatus 300 moves to a certain area, based on a user input related to the certain area, which is received through the communication interface 350, and may control the cleaning assembly 330 so that the driving robot apparatus 300 cleans the certain area.

As another example, the processor 390 may control the moving assembly 310 and the cleaning assembly 330 based on a control signal received through the input/output interface 360. The processor 390 may control the moving assembly 310 so that the driving robot apparatus 300 moves to a certain area, based on a user input related to the certain area, which is input through the input/output interface 360, and may control the cleaning assembly 330 so that the driving robot apparatus 300 cleans the certain area.

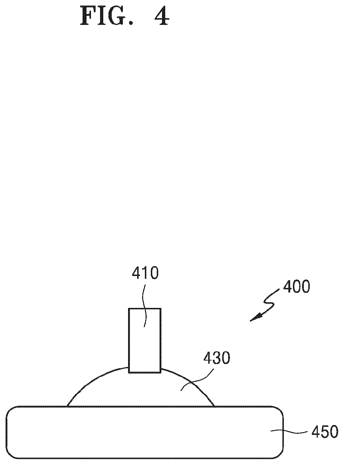

FIG. 4 is a diagram illustrating a structure of a rotary pad assembly of a driving robot apparatus, according to an embodiment of the disclosure.

The driving robot apparatus may clean the floor by using a rotary pad assembly 400.

Referring to FIG. 4, the rotary pad assembly 400 may include a cleaning pad 450, a holder 430, and a rotary motor (not illustrated). The rotary motor (not illustrated) may be connected to a rotational shaft 410.

The rotary motor (not illustrated) connected to the rotational shaft 410 applies rotation to the cleaning pad 450 in order to clean the traveling path of the driving robot apparatus. The rotary motor (not illustrated) connected to the rotational shaft 410 may apply rotation to the cleaning pad 450 by applying rotation to the holder 430 that fixes the cleaning pad 450. The rotary motor (not illustrated) connected to the rotational shaft 410 may rotate the rotational shaft 410 in uni-direction or bi-direction based on a drive signal generated by a processor of the driving robot apparatus. For example, the rotary motor (not illustrated) may rotate according to a driving signal including a rotating direction determined based on a position of an obstacle and positions of the rotational shaft 410 and the cleaning pad 450.

The holder 430 fixes the cleaning pad 450. For example, the holder 430 may have a lower portion made of Velcro, and may be coupled to the cleaning pad 450 having an upper portion made of Velcro. The holder 430 is connected to the rotational shaft 410, so that a rotational force applied from the rotary motor (not illustrated) may be transmitted to the cleaning pad 450. The holder 430 may have a disk shape.

The cleaning pad 450 is a pad that cleans the traveling path of the driving robot apparatus. The cleaning pad 450 may have a disk shape. A diameter of the cleaning pad 450 may be greater than a diameter of the holder 430. The cleaning pad 450 performs water cleaning in such a manner that the upper surface of the cleaning pad 450 absorbs supplied water and the lower surface of the cleaning pad 450 swipes the floor by using the absorbed water. The cleaning pad 450 may include the upper surface and the lower surface respectively including different materials from each other. The cleaning pad 450 may include a first member constituting an upper portion, a second member constituting a lower portion, and an outer portion that surrounds and couples the circumferences of the upper and lower portions to each other. A portion of the center of the cleaning pad 450 may be an opening.

FIG. 5 is a flowchart illustrating a controlling method of a driving robot apparatus, according to an embodiment of the disclosure. Each operation of the controlling method of FIG. 5 may be configured with one or more instructions to be executed by the driving robot apparatus, and may be stored in a recording medium.

In operation S510, the driving robot apparatus travels and performs cleaning. The driving robot apparatus may perform cleaning by using a cleaning pad while traveling. For example, the driving robot apparatus may clean a certain area with a wet mop while traveling in a certain area, based on a user input received through an input/output interface. As another example, the driving robot apparatus may travel in and clean a certain area based on a control signal received from an external device (e.g., a server, a mobile terminal, etc.) through a communication interface. As another example, the driving robot apparatus may travel in and clean a certain area based on a control signal for starting traveling and cleaning at a preset time.

In operation S520, the driving robot apparatus detects an obstacle. The driving robot apparatus may detect an obstacle on a traveling path based on obstacle data obtained by a sensor.

For example, the driving robot apparatus may detect the obstacle by identifying the external shape of the obstacle from an image obtained by an image sensor. In this case, the driving robot apparatus may apply the image to an artificial intelligence model and detect the obstacle based on a result of identifying the obstacle, which is output from the artificial intelligence model. The artificial intelligence model may be built in the driving robot apparatus, or may be built in a server to which the driving robot apparatus is communicatively connected.

As another example, the driving robot apparatus may detect an obstacle based on data regarding a distance to the obstacle, which is obtained from a sensor. The driving robot apparatus may measure the distance and direction between the driving robot apparatus and the obstacle by using a distance measuring sensor, such as a lidar sensor, an ultrasonic sensor, and a laser sensor.

As another example, the driving robot apparatus may detect an obstacle based on strength of a communication signal. The driving robot apparatus may identify home appliances, which are located on the traveling path of the driving robot apparatus, as an obstacle based on a change in the strengths of the communication signals generated from the home appliances located on the traveling path and around the driving robot apparatus. The driving robot apparatus may identify the position of the driving robot apparatus in an indoor space map, based on the strength of the communication signal. The driving robot apparatus may identify the obstacle located on the traveling path based on the position of the driving robot apparatus in the indoor space map.

As another example, when a bumper of the driving robot apparatus collides with an obstacle, the driving robot apparatus may detect the obstacle by recognizing impact applied to the bumper.

In operation S530, the driving robot apparatus starts following the obstacle. The driving robot apparatus may move along the outer edge of the identified obstacle.

According to an embodiment of the disclosure, the driving robot apparatus may align the traveling direction of the driving robot apparatus with the outer edge of the obstacle in order to follow the obstacle. For example, when the driving robot apparatus recognizes impact applied to the bumper while traveling, the driving robot apparatus may move backward in order to secure the distance to the obstacle. The driving robot apparatus may identify the traveling direction based on the position on the bumper to which the impact is applied. The driving robot apparatus may follow the obstacle by moving in the identified direction. As another example, the driving robot apparatus may identify the traveling direction to follow the outer edge of the obstacle based on distance data or a 3D map obtained from a sensor. The driving robot apparatus may follow the obstacle by moving in the identified direction.

According to an embodiment of the disclosure, the driving robot apparatus may follow the outer edge of the obstacle based on the position of the detected obstacle and the position of the popped-out cleaning assembly. For example, when the cleaning assembly to be popped out is located on the right side of the driving robot apparatus, the driving robot apparatus may change the traveling direction to follow the obstacle located on the left side of the driving robot apparatus.

According to an embodiment of the disclosure, the driving robot apparatus may follow the obstacle based on a result of comparing a first angular velocity, which is the angular velocity of the driving robot apparatus with respect to the obstacle, and a second angular velocity, which is the reference angular velocity allowing the driving robot apparatus to move along the obstacle. For example, the driving robot apparatus may follow the obstacle by maintaining the traveling path based on the first angular velocity being less than the second angular velocity. As another example, the driving robot apparatus may follow the obstacle by rotating the traveling path in an opposite direction based on the first angular velocity being greater than the second angular velocity.

According to an embodiment of the disclosure, the driving robot apparatus may follow the obstacle from a start position to an end position of the obstacle. For example, the driving robot apparatus may follow from a start position to an end point of a wall. As another example, the driving robot apparatus may follow a leg of a chair one turn from a following start position.

According to an embodiment of the disclosure, the driving robot apparatus may follow half of the outer edge of the obstacle. For example, the driving robot apparatus may follow the leg of the chair half a turn from the following start position.

In operation S540, the driving robot apparatus pops out the cleaning pad.

According to an embodiment of the disclosure, the driving robot apparatus may pop out the cleaning pad by adjusting the position of the holder that fixes the cleaning pad. The driving robot apparatus may pop out the cleaning pad, so that the cleaning pad protrudes outward from the driving robot apparatus, by adjusting the position of the holder having a diameter less than a diameter of the cleaning pad so as not to exceed the outer edge of the driving robot apparatus.

The driving robot apparatus may pop out the cleaning pad by using the cleaning assembly from which the cleaning pad may be popped out. The driving robot apparatus may include one or more cleaning assemblies from which cleaning pads are popped out. When there are a plurality of cleaning assemblies each including a cleaning pad to be popped out, the driving robot apparatus may pop out the cleaning pad by using a cleaning assembly close to an obstacle.

In operation S550, the driving robot apparatus ends following the obstacle.

According to an embodiment of the disclosure, when a certain condition is satisfied, the driving robot apparatus ends following the obstacle. For example, when the driving robot apparatus arrives at the end position of the obstacle, the driving robot apparatus ends following the obstacle. As another example, as a result of following the obstacle, when the driving robot apparatus is located at the start point of the obstacle following, the driving robot apparatus ends following the obstacle. As another example, the driving robot apparatus ends following the obstacle based on a remaining battery level of the driving robot apparatus. As another example, when the driving robot apparatus receives a certain signal (e.g., a HALO signal from a charger), the driving robot apparatus ends following the obstacle. As another example, when the driving robot apparatus detects a threshold, the driving robot apparatus may end following the obstacle.

In operation S560, the driving robot apparatus pops in the cleaning pad. When a certain condition is satisfied, the driving robot apparatus pops in the cleaning pad.

According to an embodiment of the disclosure, the driving robot apparatus pops in the cleaning pad based on a result of identifying whether the movement of the driving robot apparatus is a preset movement. For example, when there is no change in the rotation angle of the driving robot apparatus rotating (e.g., when rotating on the end of a path), the driving robot apparatus may pop in the cleaning pad. As another example, when there is no change in the position of the driving robot apparatus (e.g., when moving on the end of a path), the driving robot apparatus may pop in the cleaning pad.

According to an embodiment of the disclosure, the driving robot apparatus may pop in the cleaning pad based on the HALO signal generated from the charger of the driving robot apparatus. For example, the driving robot apparatus may use a sensor to detect the HALO signal emitted from the charger of the driving robot apparatus at a certain distance. When the strength of the detected HALO signal increases, the driving robot apparatus may pop in the cleaning pad.

According to an embodiment of the disclosure, the driving robot apparatus may pop in the cleaning pad based on the remaining battery level of the driving robot apparatus. For example, the driving robot apparatus may identify the remaining battery level of the driving robot apparatus at certain intervals. When the remaining battery level is identified as less than or equal to a threshold value, the driving robot apparatus may pop in the cleaning pad.

According to an embodiment of the disclosure, the driving robot apparatus may pop in the cleaning pad based on the determination to cross over the threshold. When the driving robot apparatus crosses over the threshold, the driving robot apparatus may pop in the cleaning pad in order to prevent failure of the crossing due to the popped-out cleaning pad or damage to the rotary pad assembly due to the threshold.

According to an embodiment of the disclosure, the driving robot apparatus may pop in the cleaning pad based on a magnet sensor for the position of the holder. For example, when the cleaning pad is popped out, the driving robot apparatus may pop in the popped-out cleaning pad to the proper position based on the magnet sensor for the position of the holder.

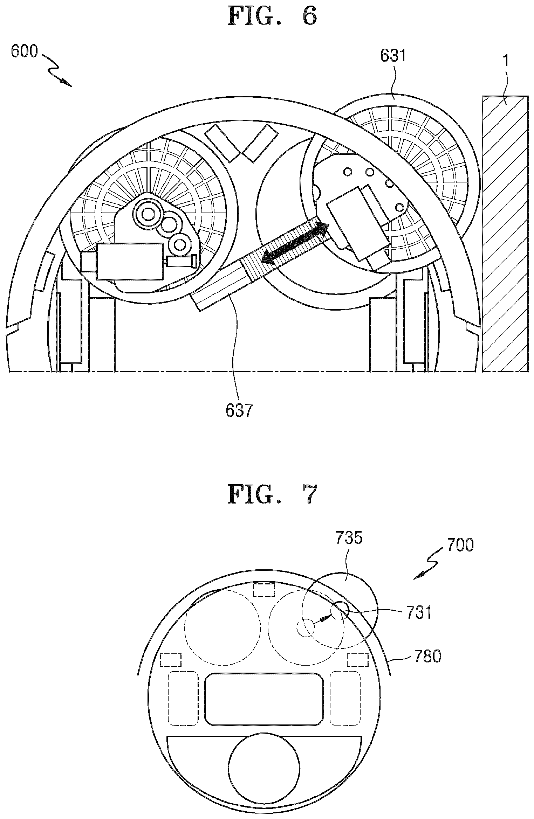

FIG. 6 is a diagram illustrating a structure of a rotary pad assembly of a driving robot apparatus that is popped out, according to an embodiment of the disclosure.

A driving robot apparatus 600 may pop out a cleaning pad 631 in order to clean a space between an obstacle 1 and a bottom of the driving robot apparatus 600. Also, the driving robot apparatus 600 may pop out the cleaning pad 631 in order to clean the space between the obstacle 1 and the driving robot apparatus 600, that is, the space the cleaning pad 631 does not reach due to the external curvature of the driving robot apparatus 600. The driving robot apparatus 600 may pop out the cleaning pad 631 so that the cleaning pad 631 protrudes outward from the driving robot apparatus 600.

Referring to FIG. 6, the driving robot apparatus 600 according to an embodiment of the disclosure may pop out the cleaning pad 631 by using a guide 637 to which the cleaning pad 631 is attached. The guide 637 may be connected to a holder to which the cleaning pad 631 is attached, and the driving robot apparatus 600 may move the holder along the guide 637 in a certain direction. Although FIG. 6 illustrates an embodiment of the disclosure in which only one cleaning pad 631 among a plurality of cleaning pads is popped out, the disclosure is not limited thereto. It is apparent to those of ordinary skill in the art that a rotary pad assembly may be configured so that each of the cleaning pads is popped out by adjusting the position, length, direction, etc. of the guide 637.

According to an embodiment of the disclosure, the guide 637 may include a rail, and the holder may include a moving module that moves along the rail. The driving robot apparatus 600 may control the holder to move along the rail to a preset position. For example, the driving robot apparatus 600 may control the holder to move to the preset position by applying a driving signal of a linear motor connected to the moving module of the holder.

According to an embodiment of the disclosure, the driving robot apparatus 600 may pop out the cleaning pad 631 by using an arm having one side connected to the driving robot apparatus 600 and the other side connected to the holder that fixes the cleaning pad 631. For example, the driving robot apparatus 600 may pop out the cleaning pad 631 by rotating the other side of the arm, to which the cleaning pad 631 is fixed, toward the outside of the driving robot apparatus 600 with the one side of the arm coupled to the driving robot apparatus 600 as the center of the rotation axis,

FIG. 7 is a diagram illustrating an operation by which a rotary pad assembly of a driving robot apparatus is popped out, according to an embodiment of the disclosure. Referring to FIG. 7, a driving robot apparatus 700 may move a holder 731 fixing a cleaning pad 735, so that a cleaning pad 735 protrudes outward from the driving robot apparatus 700.

According to an embodiment of the disclosure, the driving robot apparatus 700 may adjust the position of the holder 731 so that the holder 731 moves within the driving robot apparatus 700. For example, the driving robot apparatus 700 may adjust the position of the holder 731 so that the holder 731 does not exceed an outer edge of a bumper 780 of the driving robot apparatus 700. In this case, even when the holder 731 moves within the driving robot apparatus 700, the cleaning pad 735 having a diameter greater than a diameter of the holder 731 may protrude outward from the driving robot apparatus 700.

According to the embodiment of the disclosure, because the holder 731 connected to a rotational shaft of the cleaning pad 735 does not protrude outward from the driving robot apparatus 700, the probability of malfunction of the rotary pad assembly while the driving robot apparatus 700 travels is reduced.

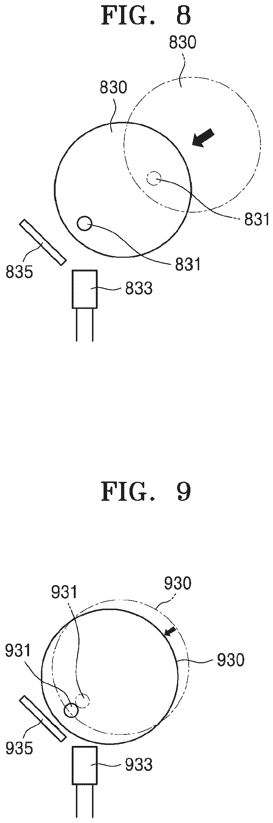

FIG. 8 is a diagram illustrating an operation by which a rotary pad assembly of a driving robot apparatus is popped in, according to an embodiment of the disclosure, and FIG. 9 is a diagram illustrating an operation by which a rotary pad assembly of a driving robot apparatus is popped in, according to an embodiment of the disclosure. Referring to FIGS. 8 and 9, a driving robot apparatus may pop in cleaning pads 830 and 930 to proper positions by using sensors 833 and 933 and guides 835 and 935.

According to an embodiment of the disclosure, the sensor 833 may identify the position of the cleaning pads 830 by identifying recognition sensors 831 respectively included in the cleaning pads 830. For example, the sensor 833 may identify the movement of the cleaning pads 830 by detecting the magnetism of the recognition sensors 831.

According to an embodiment of the disclosure, the driving robot apparatus may pop in the cleaning pad 830 from a first position to a second position in order to pop in the cleaning pads 830 to the proper positions. The second position may be a position before the popped-in cleaning pad 830 comes into contact with the guide 835. The second position may be a position set in order to control the rotary pad assembly so that the driving robot assembly pops in the cleaning pad 830 to a proper position determined by the guide 835. For example, the second position may be a position set by the driving robot apparatus in order to control a moving speed and/or a moving direction of the cleaning pad 830. When the cleaning pad 830 reaches the second position, the driving robot apparatus may reduce the moving speed of the cleaning pad 830 and adjust the moving direction toward the guide 835.

According to an embodiment of the disclosure, the driving robot apparatus may pop in cleaning pads 930 to proper positions by using the sensor 933 and/or the guide 935. For example, by recognizing that the cleaning pad 930 comes into contact with the guide 935, the driving robot apparatus may identify that the cleaning pad 930 is popped in to the proper position. As another example, the sensor 933 identifies recognition sensors 931 respectively included in the cleaning pads 930, and the driving robot apparatus may identify that the cleaning pad 930 is popped in to the proper position. When the cleaning pad 930 is located at the proper position, the driving robot apparatus may complete the pop-in of the cleaning pads 930.

According to the disclosed embodiment, because the cleaning pad is popped in to the proper position, the probability of malfunction of the rotary pad assembly during the traveling of the driving robot apparatus is reduced.

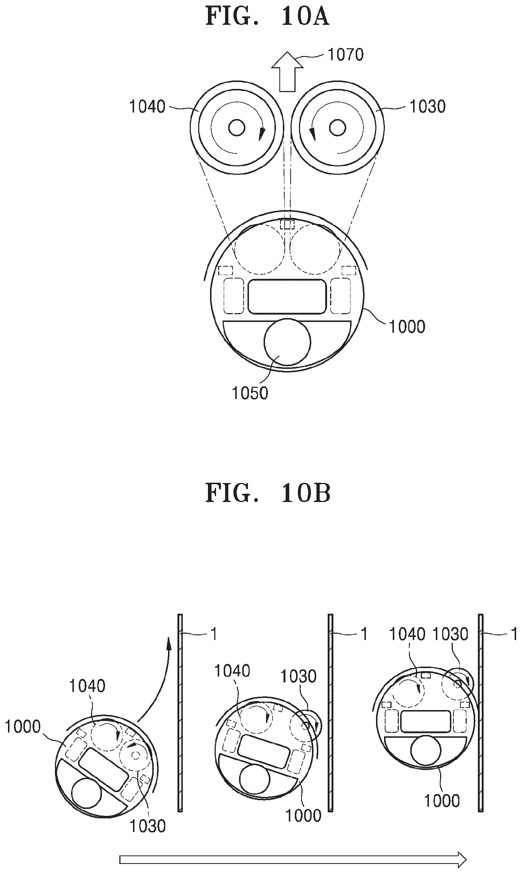

FIGS. 10A to 10C are diagrams illustrating an operation by which a rotary pad assembly of a driving robot apparatus rotates, according to an embodiment of the disclosure. Referring to FIGS. 10A to 10C, a driving robot apparatus 1000 may adjust a rotating direction of a cleaning pad.

According to an embodiment of the disclosure, the driving robot apparatus 1000 may adjust rotating directions of a plurality of cleaning pads. The driving robot apparatus 1000 may control a rotary pad assembly so that the cleaning pads rotate in the same direction or in different directions.

Referring to FIG. 10A, the driving robot apparatus 1000 according to an embodiment of the disclosure may rotate cleaning pads 1030 and 1040 during normal cleaning that does not follow an obstacle, so that foreign materials located in a traveling direction 1070 are collected in the center where an inlet 1050 of the driving robot apparatus 1000 is located. For example, when the driving robot apparatus 1000 is viewed from above as illustrated in FIG. 10A, the driving robot apparatus 1000 may rotate the cleaning pad 1040 located on the left side in a clockwise direction and rotate the cleaning pad 1030 located on the right side in a counterclockwise direction. Accordingly, foreign materials located in the center may be collected in the center of the cleaning pads 1030 and 1040.

Even when the driving robot apparatus 1000 travels in a direction opposite to the traveling direction 1070, that is, even when the driving robot apparatus 1000 travels in a direction in which the inlet 1050 is located in front, the driving robot apparatus 1000 may rotate the left cleaning pad 1040 in a clockwise direction and rotate the right cleaning pad 1030 in a counterclockwise direction. Accordingly, foreign materials that have not been sucked into the inlet may be moved to the outside of the driving robot apparatus 1000 so that the foreign materials are sucked again.

According to an embodiment of the disclosure, when the driving robot apparatus 1000 is viewed from above, the driving robot apparatus 1000 may easily turn right by rotating the cleaning pads located on both sides in a clockwise direction.

Referring to FIG. 10B, when the driving robot apparatus 1000 encounters an obstacle, the driving robot apparatus 1000 may change the rotating directions of the cleaning pads 1030 and 1040.

According to an embodiment of the disclosure, the driving robot apparatus 1000 may control the rotary pad assembly so that the popped-out cleaning pad 1030 rotates toward the obstacle 1. For example, referring to the first diagram of FIG. 10B, during the normal cleaning, the driving robot apparatus 1000 may rotate the cleaning pads 1030 and 1040 inward so that foreign materials located in the traveling direction are collected in the center where the inlet of the driving robot apparatus 1000 is located.

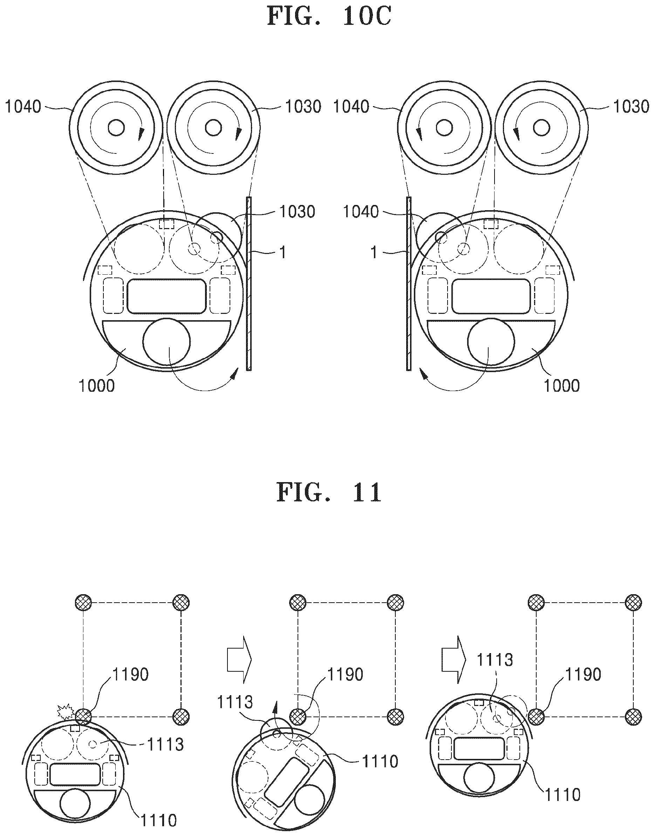

Referring to the second drawing of FIG. 10B, when the driving robot apparatus 1000 determines that there is the obstacle 1 on the right side of the traveling direction, the driving robot apparatus 1000 may pop out the cleaning pad 1030 located on the front right side of the driving robot apparatus 1000 so as to follow the obstacle 1 located on the right side of the driving robot apparatus 1000. Also, referring to the third drawing of FIG. 10C, the driving robot apparatus 1000 may rotate the popped-out cleaning pad 1030 in clockwise direction, which is a direction in which the obstacle 1 is located. In a case where the driving robot apparatus 1000 follows the obstacle 1 located on the right side of the driving robot apparatus 1000, when the right cleaning pad 1030 is rotated in a counterclockwise direction, the load of the cleaning pad 1030 increases. Accordingly, the driving robot apparatus 1000 may be spaced apart from the obstacle 1. On the other hand, when the cleaning pad 1030 is rotated in a clockwise direction, the driving robot apparatus 1000 may follow the obstacle 1 without being spaced apart from the obstacle 1.

Referring to FIG. 10C, the driving robot apparatus 1000 may change the rotating direction of the popped-out cleaning pad according to the position of the obstacle 1. For example, referring to the left drawing of FIG. 10C, when the obstacle 1 located on the right side is detected, the driving robot apparatus 1000 may pop out the right cleaning pad 1030 and change the rotating direction of the right cleaning pad 1030 to the clockwise direction. Also, referring to the right drawing of FIG. 10C, when the obstacle 1 located on the left side is detected, the driving robot apparatus 1000 may pop out the left cleaning pad 1040 and change the rotating direction of the left cleaning pad 1040 to the counterclockwise direction.

According to the embodiment of the disclosure, the driving robot apparatus 1000 may control the rotating direction of the rotary pad assembly so that the driving robot apparatus 1000 may perform cleaning while easily following the obstacle 1.

FIG. 11 is a diagram illustrating an operation by which a driving robot apparatus performs cleaning while traveling, according to an embodiment of the disclosure.

A driving robot apparatus 1110 may perform cleaning while moving between legs of a chair.

The driving robot apparatus 1110 may perform cleaning by using a cleaning pad 1113 while traveling. The driving robot apparatus 1110 may detect a leg 1190 of a chair while traveling. The driving robot apparatus 1110 may determine whether to follow the leg 1190 of the chair. For example, the driving robot apparatus 1110 may determine the distance between the legs by using a distance sensor. The driving robot apparatus 1110 may determine whether the determined distance between the legs is greater than a width of a main body of the driving robot apparatus 1110. Based on the determining that the distance between the legs is greater than the width of the main body of the driving robot apparatus 1110, the driving robot apparatus 1110 may determine to follow the leg 1190 of the chair.

Based on the determining to follow the leg 1190 of the chair, the driving robot apparatus 1110 may pop out the cleaning pad 1113 at a following start position. In this case, the driving robot apparatus 1110 may determine the cleaning pad 1113 to be popped out, based on the position of the chair relative to the driving robot apparatus 1110. For example, when the chair is located on the right side of the driving robot apparatus 1110, a right cleaning pad 1113 may be popped out. After the cleaning pad is popped out, the driving robot apparatus 1110 may adjust the angle and distance of the main body of the driving robot apparatus 1110 so that the cleaning pad comes into contact with the chair.

A driving robot apparatus 1110 may follow the periphery of the leg 1190 of the chair. The driving robot apparatus 1110 may clean a space around the leg 1190 of the chair and a space between the legs of the chair by using a popped-out cleaning pad 1113.

When a driving robot apparatus 1110 follows the leg 1190 of the chair along the periphery thereof and arrives at the following start position, the driving robot apparatus 1110 may end the following of the leg 1190 of the chair. The driving robot apparatus 1110 may pop in a popped-out cleaning pad 1113. The driving robot apparatus 1110 may perform cleaning while traveling again along the traveling path.

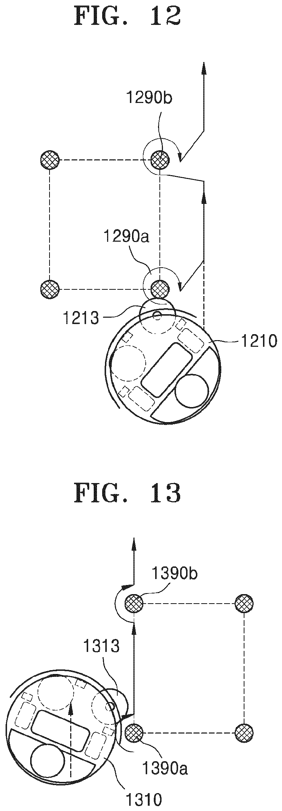

FIG. 12 is a diagram illustrating an operation by which a driving robot apparatus performs cleaning while traveling, according to an embodiment of the disclosure.

According to an embodiment of the disclosure, a driving robot apparatus 1210 may perform cleaning by sequentially following legs 1290a and 1290b of a chair. For example, based on a result of identifying the legs 1290a and 1290b of the chair, the driving robot apparatus 1210 may determine a traveling path to sequentially follow the leg 1290a of the chair close to the driving robot apparatus 1210 and the leg 1290b of the chair far from the driving robot apparatus 1210.

According to an embodiment of the disclosure, the driving robot apparatus 1210 may determine the traveling path based on a position of a cleaning pad 1213 to be popped out and a position of an obstacle. For example, the driving robot apparatus 1210 may determine the traveling path so that the driving robot apparatus 1210 follows the legs 1290a and 1290b of the chair one turn from the following start position, based on the position of the cleaning pad 1213 connected to the right side of the driving robot apparatus 1210 and the positions of the legs 1290a and 1290b of the chair located on the left side of the driving robot apparatus 1210, which are detect by using a sensor. The driving robot apparatus 1210 may follow the legs 1290a and 1290b of the chair in a clockwise direction, based on the position of the cleaning pad 1213 connected to the right side of the driving robot apparatus 1210, and may determine the traveling path so that the driving robot apparatus 1210 travels to the right side of the followed legs 1290a and 1290b of the chair.

FIG. 13 is a diagram illustrating an operation by which a driving robot apparatus performs cleaning while traveling, according to an embodiment of the disclosure.

According to an embodiment of the disclosure, a driving robot apparatus 1310 may perform cleaning by sequentially following legs 1390a and 1390b of a chair. For example, based on a result of identifying the legs 1390a and 1390b of the chair, the driving robot apparatus 1310 may determine a traveling path to sequentially follow the leg 1390a of the chair close to the driving robot apparatus 1310 and the leg 1390b of the chair far from the driving robot apparatus 1210.

According to an embodiment of the disclosure, the driving robot apparatus 1310 may determine the traveling path based on a position of a cleaning pad 1313 to be popped out and a position of an obstacle. For example, the driving robot apparatus 1310 may determine the traveling path so that the driving robot apparatus 1310 follows the legs 1390a and 1390b of the chair half a turn from the following start position, based on the position of the cleaning pad 1313 connected to the right side of the driving robot apparatus 1310 and the positions of the legs 1390a and 1390b of the chair located on the right side of the driving robot apparatus 1310, which are detect by using a sensor. The driving robot apparatus 1310 may follow the legs 1390a and 1390b of the chair in a clockwise direction, based on the position of the cleaning pad 1313 connected to the right side of the driving robot apparatus 1310, and may determine the traveling path so that the driving robot apparatus 1310 travels to the left side of the followed legs 1390a and 1390b of the chair.

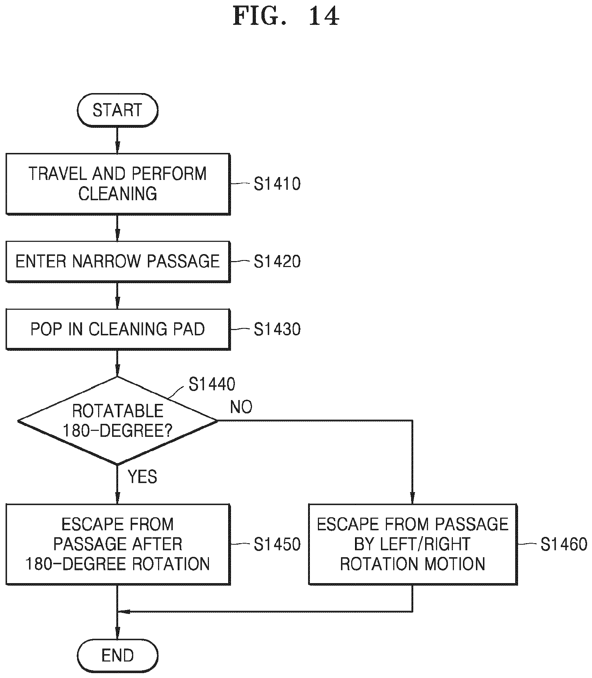

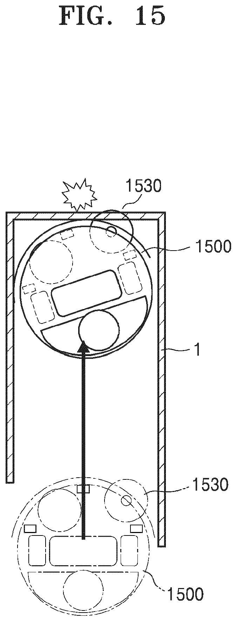

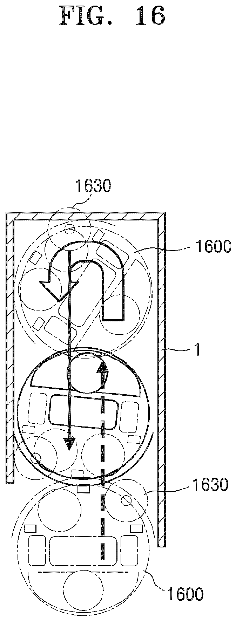

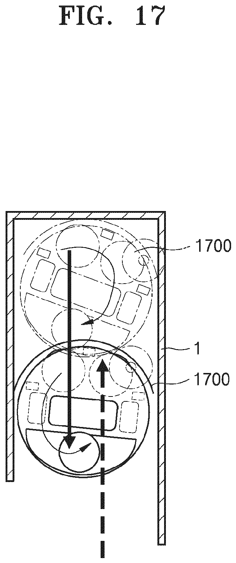

FIG. 14 is a flowchart illustrating a method by which a driving robot apparatus enters and escapes from a narrow passage, according to an embodiment of the disclosure, FIG. 15 is a diagram illustrating an operation by which a driving robot apparatus enters and escapes from a narrow passage, according to an embodiment of the disclosure, FIG. 16 is a diagram illustrating an operation by which a driving robot apparatus enters and escapes from a narrow passage, according to an embodiment of the disclosure, and FIG. 17 is a diagram illustrating an operation by which a driving robot apparatus enters and escapes from a narrow passage, according to an embodiment of the disclosure. Each operation of FIG. 14 may be configured with one or more instructions to be executed by the driving robot apparatus, and may be stored in a recording medium.

In operation S1410, the driving robot apparatus travels and performs cleaning. For example, the driving robot apparatus may travel and perform cleaning, based on a user input received through an input/output interface. As another example, the driving robot apparatus may travel and perform cleaning, based on a control signal received from an external device (e.g., a server, a mobile terminal, etc.) through a communication interface. As another example, the driving robot apparatus may travel and perform cleaning, based on a control signal for starting traveling and cleaning at a preset time.

In operation S1420, the driving robot apparatus may enter a narrow passage.

The driving robot apparatus may identify whether the driving robot apparatus is able to travel through the passage by using information about an obstacle identified by using a sensor. For example, the driving robot apparatus may identify whether the driving robot apparatus is able to travel through the passage, based on a result of comparing the width of the driving robot apparatus with the width of the passage identified by using a lidar sensor.

When driving robot apparatuses 1500 and 1600 enter the width of the passage, as illustrated in FIGS. 15 and 16, the driving robot apparatuses 1500 and 1600 may respectively pop out cleaning pads 1530 and 1630 in order to follow the wall of the passage. The driving robot apparatuses 1500 and 1600 may clean the floor of the passage and the space around the obstacle 1 by using the popped-out cleaning pads 1530 and 1630, respectively.

Driving robot apparatuses 1500 and 1600 may identify that the driving robot apparatuses 1500 and 1500 have reached the end of the passage. The driving robot apparatuses 1500 and 1600 may identify that the driving robot apparatuses 1500 and 1600 have reached the end of the passage, based on information obtained using a sensor. For example, by identifying the distance between the end of the passage and the driving robot apparatuses 1500 and 1600, which is obtained by using a lidar sensor, the driving robot apparatuses 1500 and 1600 may identify that the driving robot apparatuses 1500 and 1600 have reached the end of the passage.

Upon identifying that the driving robot apparatus 1500 has reached the end of the passage, the driving robot apparatus 1500 may rotate and escape from the passage. The driving robot apparatus 1500 may clean the space around the obstacle 1 while escaping from the passage by using a popped-out cleaning pad 1530.

In operation S1430, the driving robot apparatus 1600 may pop in the cleaning pad when a certain condition is satisfied.

According to an embodiment of the disclosure, when the driving robot apparatus 1600 rotates at the end of the passage, the driving robot apparatus 1600 may pop in a cleaning pad 1630 in response to no change in the value of the rotation angle of the driving robot apparatus 1600. When the driving robot apparatus 1600 is unable to rotate at the end of the passage due to the popped-out cleaning pad 1630, the change in the value of the rotation angle of the driving robot apparatus 1600 may not exist. Accordingly, in order to escape from the passage, the driving robot apparatus 1600 may rotate after popping in the cleaning pad 1630.

According to an embodiment of the disclosure, when the driving robot apparatus moves at the end of the passage, the driving robot apparatus may pop in the cleaning pad 1630 in response to no change in the position value. When the driving robot apparatus 1600 is unable to move at the end of the passage due to the popped-out cleaning pad 1630, the change in the position value of the driving robot apparatus 1600 may not exist. Accordingly, in order to escape from the passage, the driving robot apparatus 1600 may move after popping in the cleaning pad 1630.

In operation S1440, the driving robot apparatus may identify whether the driving robot apparatus is rotatable 180 degrees.

The driving robot apparatuses 1600 and 1700 may identify whether the driving robot apparatuses 1600 and 1700 are rotatable 180 degrees at the end of the passage in order to escape from the passage. For example, by identifying the change in the values of the rotation angles of the driving robot apparatuses 1600 and 1700 that are rotating at the end of the passage, the driving robot apparatuses 1600 and 1700 may identify whether the driving robot apparatuses 1600 and 1700 are rotatable.

In operation S1450, the driving robot apparatus may escape from the narrow passage after 180-degree rotation. Referring to FIG. 16, when the driving robot apparatus 1600 is rotatable 180 degrees, the driving robot apparatus 1600 may rotate and then move forward to escape from the passage.

After the driving robot apparatus 1600 rotates 180 degrees, the driving robot apparatus 1600 may identify whether the driving robot apparatus 1600 is able to pop out the popped-in cleaning pad. For example, the driving robot apparatus 1600 may identify whether the driving robot apparatus 1600 is able to pop out the cleaning pad 1630, based on a result of comparing the width of the passage identified by using the sensor and the width of the driving robot apparatus 1600.

When the driving robot apparatus 1600 is unable to pop out the cleaning pad 1630, the driving robot apparatus 1600 may move forward to escape from the passage. When the driving robot apparatus 1600 is able to pop out the cleaning pad 1630, the driving robot apparatus 1600 may pop out the cleaning pad 1630 and move forward to clean a space between the obstacle 1 and the bottom of the cleaning pad 1630.

In operation S1460, the driving robot apparatus that is not rotatable 180 degrees at the end of the passage may rotate left and right to escape from the narrow passage. Referring to FIG. 17, when the driving robot apparatus 1700 is unable to rotate 180 degrees at the end of the passage, the driving robot apparatus 1700 is stuck in the passage. Accordingly, the driving robot apparatus 1700 may escape from the passage by moving backward while rotating left and right by a certain angle.

A driving robot apparatus 1700 that is escaping from the passage may identify whether the driving robot apparatus 1700 is rotatable 180 degrees. The driving robot apparatus 1700 that is rotatable 180 degrees may rotate and then move forward to escape from the passage.

According to the embodiment of the disclosure, the driving robot apparatus may clean the narrow passage and easily escape from the narrow passage.

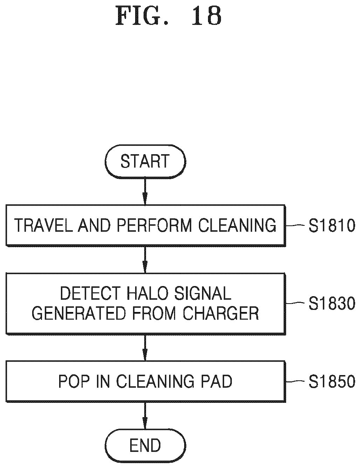

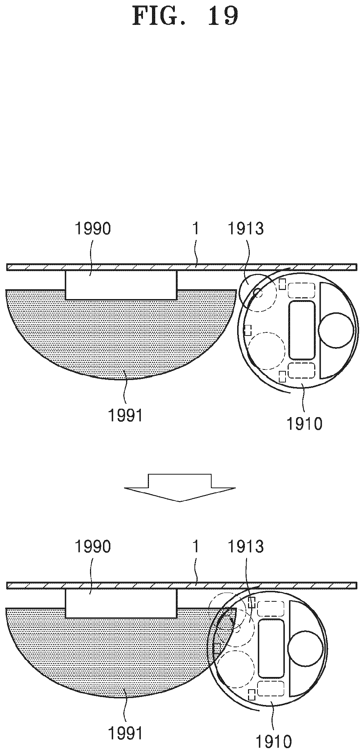

FIG. 18 is a flowchart illustrating a controlling method when a driving robot apparatus detects a charger, according to an embodiment of the disclosure, and FIG. 19 is a diagram illustrating an operation when a driving robot apparatus detects a charger, according to an embodiment of the disclosure. Each operation of FIG. 18 may be configured with one or more instructions to be executed by the driving robot apparatus, and may be stored in a recording medium.

In operation S1810, a driving robot apparatus 1910 travels and performs cleaning. The driving robot apparatus 1910 may pop out a cleaning pad 1913 and clean a space between an obstacle 1 and the driving robot apparatus 1910. Because operation S1810 is similar to operation S1410, a redundant description thereof is omitted.

In operation S1830, the driving robot apparatus 1910 may detect a HALO signal generated from a charger 1990. The charger 1990 may be a wall mount-type charger or a freestanding-type charger. The driving robot apparatus 1910 may malfunction while colliding with the charger 1990 during traveling or while passing a line connected to the charger 1990. In particular, a malfunction easily occurs because the cleaning pad 1913 of the driving robot apparatus 1910 following the obstacle 1 is vulnerable to impact in a popped-out state.

According to an embodiment of the disclosure, the charger 1990 may transmit a HALO signal 1991 of a certain frequency domain. For example, the charger 1990 may transmit the HALO signal 1991 to all directions of the charger 1990 at a high frequency exceeding a human audible frequency. The charger 1990 may generate and transmit the HALO signal 1991 in accordance with a standard agreed upon by home appliance companies.

According to an embodiment of the disclosure, the charger 1990 may include a docking station of the driving robot apparatus 1910 that is installed to charge and hold the driving robot apparatus 1910. The charger 1990 may generate and emit the HALO signal 1991 that may be identified by the driving robot apparatus 1910 so that the driving robot apparatus 1910 easily returns back for charging.

According to an embodiment of the disclosure, the driving robot apparatus 1910 may detect the HALO signal 1991 by using a sensor and recognize the charger 1990 located near the driving robot apparatus 1910. The driving robot apparatus 1910 may recognize the charger 1990 based on a result of detecting the HALO signal 1991 having a certain intensity or more. The driving robot apparatus 1910 may detect the HALO signal 1991 of a certain frequency domain by using a sensor. The driving robot apparatus 1910 may identify a distance between the driving robot apparatus 1910 and the charger 1990 by identifying a change in the intensity of the HALO signal 1991.

In operation S1850, a driving robot apparatus 1910 may pop-in the cleaning pad based on the HALO signal. The driving robot apparatus 1910 may pop in a popped-out cleaning pad 1913 based on a result of identifying the charger 1990 through the HALO signal 1991.

According to an embodiment of the disclosure, the driving robot apparatus 1910 may pop in the cleaning pad 1913 based on a result of detecting the HALO signal 1991 having a certain intensity or more. The driving robot apparatus 1910 may pop in the cleaning pad 1913 based on the distance between the driving robot apparatus 1910 and the charger 1990, which is identified based on the change in the intensity of the HALO signal 1991.

According to an embodiment of the disclosure, the driving robot apparatus 1910 may adjust the traveling path of the driving robot apparatus 1910 based on a result of detecting the HALO signal 1991. For example, based on a result of detecting the HALO signal 1991 of the certain intensity or more, the driving robot apparatus 1910 may adjust the traveling path so as to move to an area where the HALO signal 1991 of the certain intensity or less is detected. The driving robot apparatus 1910 may pop out the popped-in cleaning pad 1913 when the intensity of the HALO signal 1991 is detected to be the certain intensity or less. The driving robot apparatus 1910 may perform cleaning by using the popped-out cleaning pad 1913 while following the obstacle 1.

According to the embodiment of the disclosure, the driving robot apparatus 1910 may reduce the probability of malfunction by easily avoiding the charger 1990.

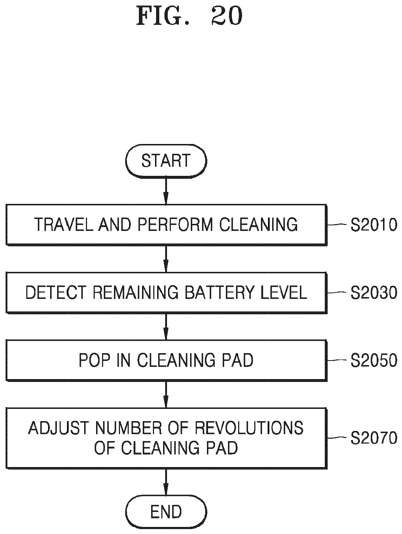

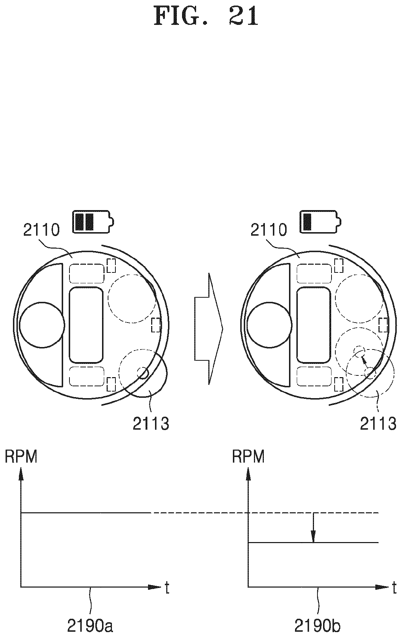

FIG. 20 is a flowchart illustrating a controlling method of a driving robot apparatus according to a remaining battery level, according to an embodiment of the disclosure, and FIG. 21 is a diagram illustrating an operation of a driving robot apparatus according a remaining battery level, according to an embodiment of the disclosure. Each operation of FIG. 20 may be configured with one or more instructions to be executed by the driving robot apparatus, and may be stored in a recording medium. Operations S2050 and S2070 do not correspond to essential operations, and may be selectively performed by the driving robot apparatus.

In operation S2010, a driving robot apparatus 2110 travels and performs cleaning. The driving robot apparatus 2110 may pop out a cleaning pad 2113 and clean a space between an obstacle and the driving robot apparatus 2110. Because operation S2010 is similar to operations S1410 and S1810, a redundant description thereof is omitted.

In operation S2030, the driving robot apparatus 2110 may detect a remaining battery level of the driving robot apparatus 2110. For example, the driving robot apparatus 2110 may detect the remaining battery level based on a result of comparing a maximum charge amount of a battery of the driving robot apparatus 2110 with a cumulative amount of current output from the battery over time. As another example, the driving robot apparatus 2110 may detect the remaining battery level based on a result of comparing a voltage of the battery when the battery is fully charged with a voltage of the battery which is obtained real time.

In operation S2050, a driving robot apparatus 2110 may pop in a cleaning pad based on the remaining battery level. When a rotary motor of a rotary pad assembly rotates the popped-out cleaning pad, a great load occurs and a lot of power is consumed.

According to an embodiment of the disclosure, the driving robot apparatus 2110 may pop in a cleaning pad 2113 that consumes a lot of power, based on a result of comparing the remaining battery level with a reference value. For example, the driving robot apparatus 2110 may pop in the popped-out cleaning pad 2113 based on a result of identifying that the remaining battery level detected by using the current output from the battery of the driving robot apparatus 2110 is less than the reference value. As another example, the driving robot apparatus 2110 may pop in the popped-out cleaning pad 2113 based on a result of identifying that the remaining battery level detected by using the voltage of the battery is less than the reference value. In this case, the driving robot apparatus 2110 follows the obstacle without popping out the cleaning pad 2113.

In operation S2070, the driving robot apparatus 2110 may adjust the number of revolutions of the cleaning pad 2113 based on the remaining battery level. The driving robot apparatus 2110 may lower the number of revolutions of the cleaning pad 2113 in order to minimize power consumption according to the load of the cleaning pad 2113. For example, as shown in a first graph 2190a, when the remaining battery level is greater than the reference value, the driving robot apparatus 2110 may rotate the cleaning pad 2113 at a first RPM. As shown in a second graph 2190b, when the remaining battery level is less than the reference value, the driving robot apparatus 2110 may adjust the number of revolutions in order to rotate the cleaning pad 2113 at a second RPM lower than the first RPM.

According to the embodiment of the disclosure, the driving robot apparatus 2110 controls the cleaning pad according to the remaining battery level, thereby enabling efficient operation according to the remaining battery level.

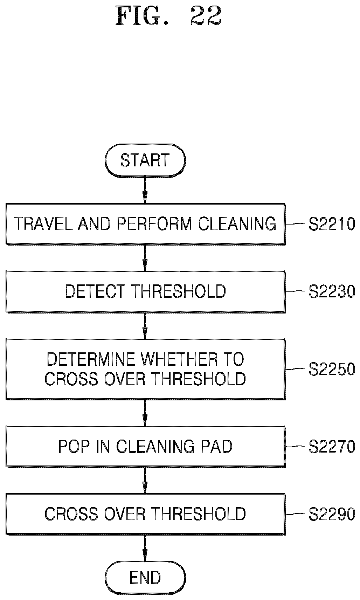

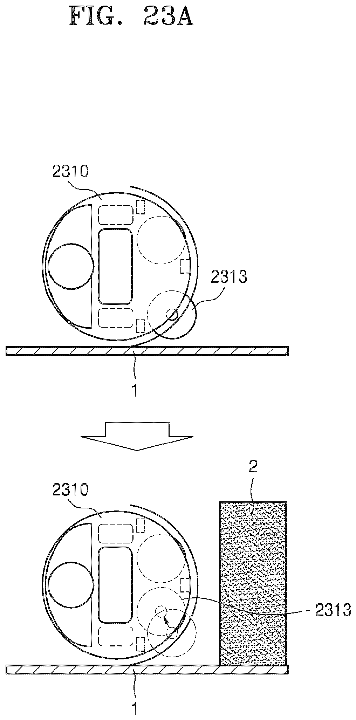

FIG. 22 is a flowchart illustrating a method by which a driving robot apparatus crosses over a threshold, according to an embodiment of the disclosure, and FIGS. 23A to 23C are diagrams illustrating an operation by which a driving robot apparatus crosses over a threshold, according to an embodiment of the disclosure. Each operation of FIG. 22 may be configured with one or more instructions to be executed by the driving robot apparatus, and may be stored in a recording medium.

In operation S2210, a driving robot apparatus 2310 travels and performs cleaning. The driving robot apparatus 2310 may pop out a cleaning pad 2313 and clean a space between an obstacle and the driving robot apparatus 2310. Because operation S2210 is similar to operations S1410, S1810, and S2010, a redundant description thereof is omitted.

In operation S2230, the driving robot apparatus 2310 may detect a threshold 2 near the driving robot apparatus 2310. The driving robot apparatus 2310 may identify the threshold 2 by using information about an obstacle identified by using a sensor. For example, the driving robot apparatus 2310 may identify a height of the threshold 2 and a distance between the driving robot apparatus 2310 and the threshold 2 by using a lidar sensor.

In operation S2250, the driving robot apparatus 2310 may determine whether to cross over the threshold 2.

According to an embodiment of the disclosure, the driving robot apparatus 2310 may identify whether the driving robot apparatus 2310 is able to cross over the threshold 2, based on the height of the threshold 2. For example, the driving robot apparatus 2310 may identify whether the driving robot apparatus 2310 is able to cross over the threshold 2, based on a result of comparing the height of the threshold 2 obtained by using a sensor (e.g., an ultrasonic sensor, a lidar sensor, a 3D sensor, etc.) with a reference height over which the driving robot apparatus 2310 is able to cross. When the height of the threshold 2 is less than or equal to the reference height, the driving robot apparatus 2310 may identify that the driving robot apparatus 2310 is able to cross over the threshold 2.

According to an embodiment of the disclosure, the driving robot apparatus 2310 may identify whether to cross over the threshold 2, based on a traveling path. The driving robot apparatus 2310 may determine to cross over the threshold 2, based on a setting of performing cleaning by crossing over the threshold 2 on the traveling path. The driving robot apparatus 2310 may determine to cross over the threshold 2, based on a user input received through an input/output interface. The driving robot apparatus 2310 may determine to cross over the threshold 2, based on a control signal received from an external device (e.g., a server, a mobile terminal, etc.) through a communication interface. The driving robot apparatus 2310 may determine to cross over the threshold 2, based on a history of performing cleaning by crossing over the threshold 2. The driving robot apparatus 2310 may determine to cross over the threshold 2 after cleaning a certain area along the traveling path.

In operation S2270, the driving robot apparatus 2310 may pop in the cleaning pad based on a result of the determining. While the driving robot apparatus 2310 crosses over the threshold 2, the cleaning pad 2313 may collide with the threshold 2, causing a malfunction. In particular, because the popped-out cleaning pad 2313 is vulnerable to impact, a malfunction easily occurs. Accordingly, the driving robot apparatus 2310 may pop in the cleaning pad 2313 based on a result of determining to cross over the threshold 2.

In operation S2290, the driving robot apparatus 2310 may cross over the threshold 2. The driving robot apparatus 2310 may cross over the threshold 2 after popping in the cleaning pad 2313. The driving robot apparatus 2310 may clean a certain area after crossing over the threshold 2.

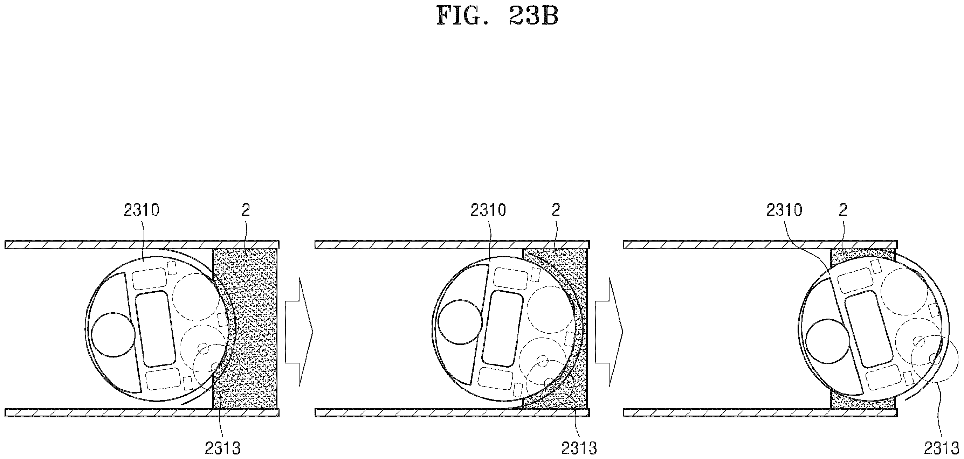

As illustrated in FIG. 23B, the driving robot apparatus 2310 according to an embodiment of the disclosure may cross over the threshold 2 by alternately rotating clockwise and counterclockwise at a preset angle while moving forward in the traveling direction. For example, upon determining to cross over the threshold 2, the driving robot apparatus 2310 may cross over the threshold 2 by repeating rotating clockwise at the same time as moving forward in the traveling direction and then rotating counterclockwise at the same time as moving forward in the traveling direction.

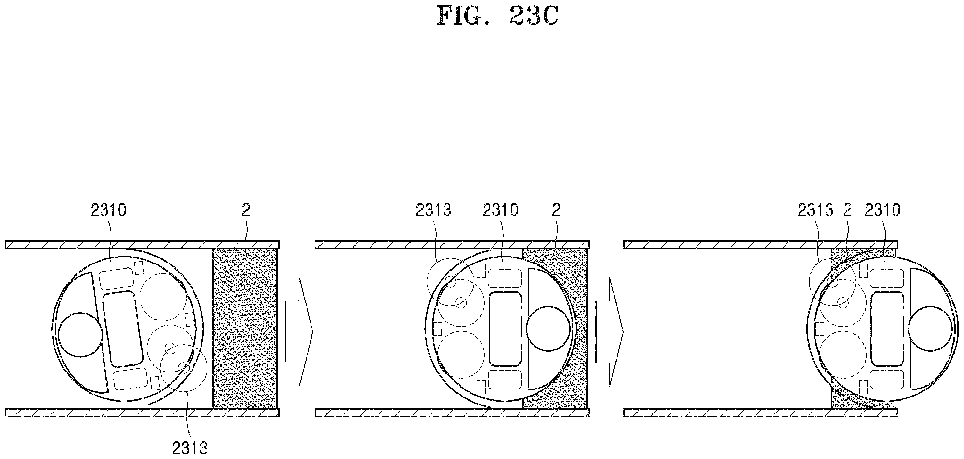

Also, as illustrated in FIG. 23C, upon determining to cross over the threshold 2, the driving robot apparatus 2310 according to an embodiment of the disclosure may cross over the threshold 2 backward by rotating so that the front of the driving robot apparatus 2310, where the cleaning pad 2313 is located, faces the direction opposite to the traveling direction and then moving backward. In this case, the driving robot apparatus 2310 may cross over the threshold 2 by alternately rotating clockwise and counterclockwise at the same time as crossing backward, as illustrated in FIG. 23B. According to the embodiments of the disclosure, the driving robot apparatus 2310 may reduce the problem that the cleaning pad 2313 is caught on the threshold 2 when the driving robot apparatus 2310 crosses over the threshold 2. Also, according to the embodiments of the disclosure, the probability of malfunction when the driving robot apparatus 2310 crosses over the threshold 2 may be reduced.

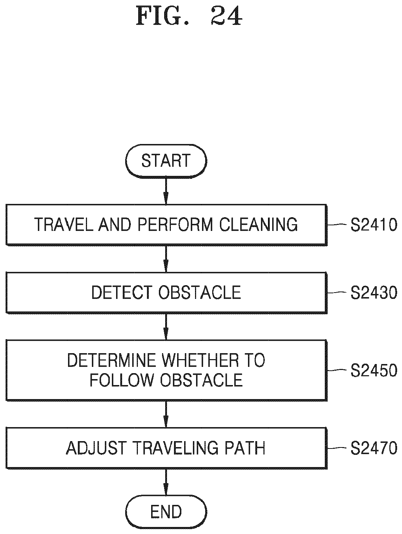

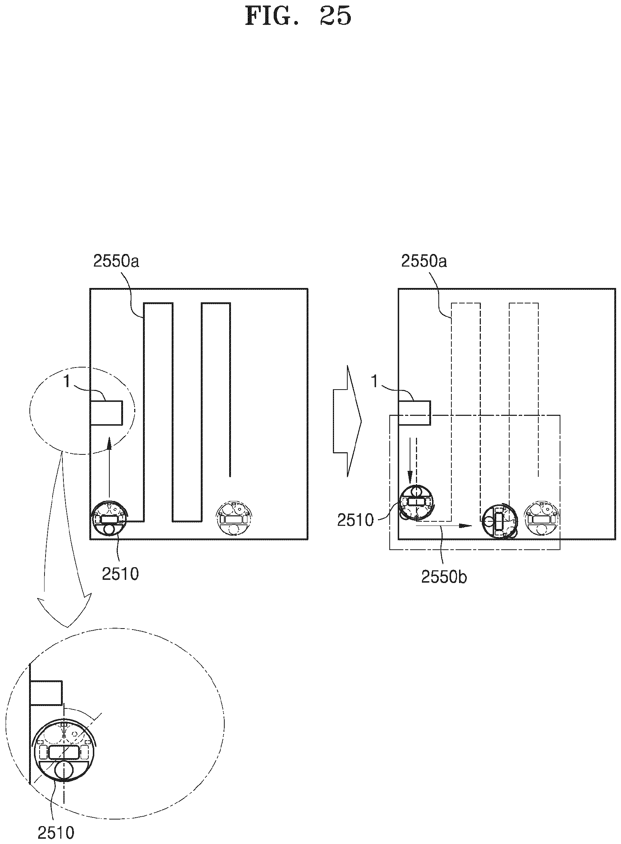

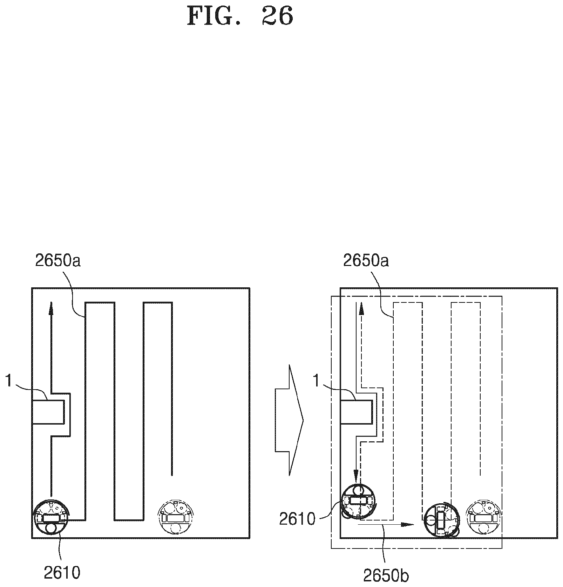

FIG. 24 is a flowchart illustrating a method by which a driving robot apparatus detects an obstacle and adjusts a traveling path, according to an embodiment of the disclosure, FIG. 25 is a diagram illustrating an operation by which a driving robot apparatus detects an obstacle and adjusts a traveling path, according to an embodiment of the disclosure, and FIG. 26 is a diagram illustrating an operation by which a driving robot apparatus detects an obstacle and adjusts a traveling path, according to an embodiment of the disclosure. Each operation of FIG. 24 may be configured with one or more instructions to be executed by the driving robot apparatus, and may be stored in a recording medium.

In operation S2410, a driving robot apparatus travels and performs cleaning. Driving robot apparatuses 2510 and 2610 may travel from a traveling start point in zigzag in a certain area along traveling paths 2550a and 2650a. The driving robot apparatuses 2510 and 2610 may pop out a cleaning pad and clean a space between an obstacle and the driving robot apparatuses 2510 and 2610. Because operation S2410 is similar to operations S1410, S1810, S2010, and S2210, a redundant description thereof is omitted.

In operation S2430, the driving robot apparatus may detect an obstacle near the driving robot apparatus.

A driving robot apparatus 2510 may detect an obstacle 1 by using information about the obstacle 1 identified by using a sensor. For example, the driving robot apparatus 2510 may identify a distance between the driving robot apparatus 2510 and the obstacle 1 by using a lidar sensor. Because operation S2430 is similar to operation S520, a redundant description thereof is omitted.

In operation S2450, the driving robot apparatuses 2510 and 2610 may determine whether to cross over the obstacle 1.

According to an embodiment of the disclosure, the driving robot apparatuses 2510 and 2610 may determine whether to follow the obstacle 1 based on a result of comparing an angular velocity of the driving robot apparatuses 2510 and 2610 with respect to the obstacle 1 with a reference angular velocity allowing the driving robot apparatuses 2510 and 2610 to move along the obstacle 1. The reference angular velocity is a critical angular velocity at which it is difficult for the driving robot apparatuses 2510 and 2610 to follow the obstacle 1. The reference angular velocity may be preset. The angular velocity of the driving robot apparatuses 2510 and 2610 with respect to the obstacle 1 is an angular velocity required for the driving robot apparatuses 2510 and 2610 to follow the obstacle 1 while traveling. When the angular velocity of the driving robot apparatus 2510 with respect to the obstacle 1 is greater than the reference angular velocity, the driving robot apparatus 2510 may determine not to follow the obstacle 1. When the angular velocity of the driving robot apparatus 2610 with respect to the obstacle 1 is less than the reference angular velocity, the driving robot apparatus 2610 may determine to follow the obstacle 1.

In operation S2470, the driving robot apparatus may adjust the traveling path based on a result of the determining.

According to an embodiment of the disclosure, the driving robot apparatus 2510 may adjust the traveling path based on a result of determining not to follow the obstacle 1. For example, the driving robot apparatus 2510 may adjust a traveling path 2550b so as to rotate in a direction opposite to the traveling direction and return to a traveling start point while following a wall surface. After returning to the traveling start point, the driving robot apparatus 2510 may travel in zigzag in an area where the driving robot apparatus 2510 does not travel.

According to an embodiment of the disclosure, a driving robot apparatus 2610 may adjust a traveling path after completing following the obstacle 1, based on a result of determining to follow the obstacle 1. For example, the driving robot apparatus 2610 following the obstacle 1 may adjust a traveling path 2650b to return to a traveling start point after reaching a following end point. Based on a result of following the obstacle 1, the driving robot apparatus 2610 may follow the obstacle 1 even when returning to the traveling start point. The driving robot apparatus 2610 may return to the traveling start point while following a wall surface. After returning to the traveling start point, the driving robot apparatus 2610 may travel in zigzag in an area where the driving robot apparatus 2610 does not travel.

According to the embodiment of the disclosure, the driving robot apparatus may flexibly adjust the traveling path according to the obstacle.

On the other hand, a machine-readable storage medium may be provided in the form of a non-transitory storage medium. The "non-transitory storage medium" is a tangible device and only means not including a signal (e.g., electromagnetic wave). This term does not distinguish between a case where data is semi-permanently stored in a storage medium and a case where data is temporarily stored in a storage medium. For example, the non-transitory storage medium may include a buffer in which data is temporarily stored.

According to an embodiment of the disclosure, the methods according to various embodiments of the disclosure disclosed herein may be provided by being included in a computer program product. The computer program products may be traded between a seller and a buyer as commodities. The computer program product may be distributed in the form of a machine-readable storage medium (e.g., compact disc read only memory (CD-ROM)), or may be distributed (e.g., downloaded or uploaded) online either via an application store or directly between two user devices (e.g., smartphones). In the case of the online distribution, at least a part of a computer program product (e.g., downloadable app) is stored at least temporarily on a machine-readable storage medium, such as a server of a manufacturer, a server of an application store, or a memory of a relay server, or may be temporarily generated.

## Claims

1. A driving robot apparatus(1 0; 300) comprising:
a moving assembly(11; 310);
a cleaning assembly(12; 330) including a holder to which a cleaning pad is fixable, the holder being movable;
a sensor(14; 340) configured to detect an obstacle located on a traveling path of the driving robot apparatus(10; 300); and
at least one processor(19; 390) configured to, based on the detection of the obstacle by the sensor(14; 340):
control the moving assembly(11; 310) to change a traveling direction of the driving robot apparatus(10; 300) so that the driving robot apparatus(1 0; 300) is aligned with the obstacle,
control the cleaning assembly(12; 330) to move the holder so that a cleaning pad fixed to the holder protrudes outward from the driving robot apparatus(10; 300), and
control the moving assembly(11; 310) to move the driving robot apparatus(10; 300) so that the cleaning pad fixed to the holder and protruding outward from the driving robot apparatus(10; 300) is moved along an outer edge of the obstacle.

2. The driving robot apparatus of claim 1, wherein
the at least one processor is further configured to:
control the moving assembly(11; 310) so that the driving robot apparatus is aligned with the obstacle based on an angular velocity of the driving robot apparatus with respect to the obstacle.

3. The driving robot apparatus of claim 1 or 2, wherein
the cleaning pad fixed to the holder has a diameter greater than a diameter of the holder, and
the at least one processor is further configured to:
adjust a position of the holder within a main body of the driving robot apparatus so that the cleaning pad fixed to the holder protrudes outward from the driving robot apparatus.

4. The driving robot apparatus of any one of claims 1 to 3, further comprising:
a magnet sensor to detect a first position of the holder,
wherein the at least one processor is further configured to:
move the holder from a second position to the first position based on the detection of the first position of the holder by the magnet sensor.

5. The driving robot apparatus of any one of claims 1 to 4, wherein the at least one processor is further configured to:
identify a position of the detected obstacle, and
control the moving assembly so that the cleaning pad fixed to the holder and protruding outward from the driving robot apparatus moves along at least a portion of the outer edge of the obstacle, based on the position of the detected obstacle and a position of the cleaning pad fixed to the holder and protruding outward from the driving robot apparatus.

6. The driving robot apparatus of any one of claims 1 to 5, wherein the at least one processor is further configured to:
identify whether a movement of the driving robot apparatus is a preset movement,
control the cleaning assembly to move the holder so that the cleaning pad fixed to the holder does not protrude outward from the driving robot apparatus, based on whether the movement of the driving robot apparatus is identified as a preset movement, and
control the moving assembly to travel so that the driving robot apparatus from which the cleaning pad fixed to the holder does not protrude outward follows the obstacle.

7. The driving robot apparatus of any one of claims 1 to 6, wherein
the at least one processor is further configured to:
control the sensor to identify a HALO signal generated from a charger of the driving robot apparatus, and
control the cleaning assembly to move the holder so that the cleaning pad fixed to the holder does not protrude outward from the driving robot apparatus, based on the HALO signal.

8. The driving robot apparatus of any one of claims 1 to 7, wherein
the at least one processor is further configured to:
detect a remaining battery level of the driving robot apparatus, and
control the cleaning assembly to move the holder so that the cleaning pad fixed to the holder does not protrude outward from the driving robot apparatus, based on the detected remaining battery level.

9. The driving robot apparatus of any one of claims 1 to 8, wherein
the at least one processor is further configured to:
detect a threshold via the sensor,
determine whether to cross over the threshold;
control the cleaning assembly to move the holder so that the cleaning pad fixed to the holder does not protrude outward from the driving robot apparatus, based on the determining to cross over the threshold; and
control the moving assembly to cross over the threshold.

10. The driving robot apparatus of any one of claims 1 to 9, wherein
the at least one processor is further configured to:
identify an angular velocity of the driving robot apparatus with respect to the obstacle as a first angular velocity,
compare the first angular velocity with a second angular velocity, the second angular velocity being a reference angular velocity allowing the driving robot apparatus to move along the obstacle,
adjust the traveling path of the driving robot apparatus, based on a result of the comparing the first angular velocity with the second angular velocity, and
control the moving assembly so that the driving robot apparatus moves along the adjusted traveling path.

11. A method of controlling a driving robot apparatus comprising:
detecting an obstacle located on a traveling path of the driving robot apparatus;
controlling moving assembly to change a traveling direction of the driving robot apparatus so that the driving robot apparatus is aligned with the obstacle;
controlling cleaning assembly having a holder to move the holder so that a cleaning pad fixed to the holder protrudes outward from the driving robot apparatus; and
controlling the moving assembly to move the driving robot apparatus so that the cleaning pad fixed to the holder and protruding outward from the driving robot apparatus is moved along an outer edge of the obstacle.

12. The method of claim 11, wherein
the changing of the traveling direction of the driving robot apparatus includes:
controlling the moving assembly so that the driving robot apparatus is aligned with the obstacle, based on an angular velocity of the driving robot apparatus with respect to the obstacle.

13. The method of claim 11 or 12, wherein
the cleaning pad fixed to the holder has a diameter greater than a diameter of the holder, and
the moving of the holder so that the cleaning pad fixed to the holder protrudes outward from the driving apparatus includes:
adjusting a position of the holder within a main body of the driving robot apparatus so that the cleaning pad fixed to the holder protrudes outward from the driving robot apparatus.

14. The method of any one of claims 11 to 13, further comprising:
moving the holder from a second position to a first position, based on detection by a magnet sensor of the holder being in the first position.

15. The method of any one of claims 11 to 14, wherein
the detecting of the obstacle includes identifying a position of the detected obstacle, and
the controlling of the moving assembly includes:
controlling the moving assembly so that the cleaning pad fixed to the holder and protruding outward from the driving robot apparatus moves along at least a portion of the outer edge of the obstacle, based on the position of the detected obstacle and a position of the cleaning pad fixed to the holder and protruding outward from the driving robot apparatus.
